# EUROPEAN PATENT APPLICATION

(11) **EP 4 815 349 A1**
(43) Date of publication of application: **30.09.2026**
(21) Application number: 24906293.6
(22) Date of filing: 16.12.2024
(51) Int. Cl.: H04L 1/00, H04L 61/103

(54) **ENCODING METHOD, DECODING METHOD, APPARATUS, SYSTEM AND CHIP**

(30) Priority: 20.12.2023 CN 202311764959
(71) Applicant: Huawei Technologies Co., Ltd., Shenzhen, Guangdong 518129 (CN)
(72) Inventor: PAN, Dongcheng, Shenzhen, Guangdong 518129 (CN); ZHANG, Tingting, Shenzhen, Guangdong 518129 (CN); ZHUANG, Yan, Shenzhen, Guangdong 518129 (CN); SUN, Desheng, Shenzhen, Guangdong 518129 (CN)
(74) Representative: Isarpatent
(86) International application number: PCT/CN2024/139589
(87) International publication number: WO 2025/130812

(57) **Abstract**

This application relates to the field of communication technologies, and discloses an encoding method, a decoding method, an apparatus, a system, and a chip. The encoding method includes: A first chip combines first signals to be transmitted in n periods to obtain a second signal, where the first signals in the n periods include data information and/or control information, and n is a positive integer greater than 1; the first chip encodes the second signal to obtain at least one code block; and the first chip sends the at least one code block through a serial channel, where the serial channel is used to connect a MAC layer and a PHY layer. The second signal includes n first signals, and therefore, the second signal includes a large quantity of first signals. In other words, in this method, a signal with a lower data bit width can be converted into a signal with a higher data bit width. After the second signal is encoded to obtain the at least one code block, the at least one code block includes a large quantity of first signals. Therefore, compared with that in a manner of transmitting a code block including a plurality of repeated signals, signal transmission efficiency is higher in this method.

## Description

This application claims priority to Chinese Patent Application No. 202311764959.8, filed on December 20, 2023 and entitled "ENCODING METHOD, DECODING METHOD, APPARATUS, SYSTEM, AND CHIP", which is incorporated herein by reference in its entirety.

### TECHNICAL FIELD

This application relates to the field of communication technologies, and in particular, to an encoding method, a decoding method, an apparatus, a system, and a chip.

### BACKGROUND

In the field of communication technologies, a signal transmitting end may encode a signal to obtain an encoding result, and transmit the encoding result to a signal receiving end. The signal receiving end decodes the received encoding result to restore the signal.

### SUMMARY

This application provides an encoding method, a decoding method, an apparatus, a system, and a chip, to improve signal transmission efficiency.

According to a first aspect, an encoding method is provided. The method includes: A first chip combines first signals to be transmitted in n periods to obtain a second signal, where the first signals in the n periods include at least one of data information or control information, and n is a positive integer greater than 1; the first chip encodes the second signal to obtain at least one code block; and the first chip sends the at least one code block through a serial channel, where the serial channel is used to connect a media access control (media access control, MAC) layer and a physical layer (physical layer, PHY).

In the method, the first signals in the n periods are combined to obtain the second signal, and the second signal includes a large quantity of first signals. In other words, in the method, the first signal with a lower data bit width can be converted into the second signal with a higher data bit width. In addition, when the at least one code block is obtained by encoding the second signal, the at least one code block includes a large quantity of first signals. Signal transmission efficiency is higher in this method. When the second signal includes a plurality of types of information, the plurality of types of information can be serially transmitted through the serial channel. A small quantity of channels are required for transmitting the plurality of types of information, and costs are low.

In a possible implementation, that the first chip encodes the second signal to obtain the at least one code block includes: The first chip encodes the second signal and a third signal to be transmitted to obtain a plurality of code blocks, where the third signal includes management information; and that the first chip sends the at least one code block through the serial channel includes: The first chip sends the plurality of code blocks through the serial channel. When the third signal is further encoded in the method, the plurality of code blocks obtained through encoding can include a plurality of types of information. The serial channel used to transmit the plurality of code blocks can be implemented by one pin (pin) or one group of pins, so that a quantity of pins that are included in the first chip and that are used to implement the serial channel can be small. When the at least one of the data information or the control information is transmitted through the serial channel, and the management information is also transmitted through the serial channel, the data information, the control information, and the management information can be transmitted through the same serial channel. Therefore, costs of transmitting the data information, the control information, and the management information are low in this method.

In a possible implementation, the at least one code block includes a first code block and a second code block, the first code block includes the second signal, the second code block includes a type indication, and the type indication indicates a type of a signal included in the second signal. In other words, the type indication indicating the type of the signal may be included in the second code block other than the first code block. A chip that subsequently receives the first code block and the second code block can directly obtain the type indication from the second code block, and obtain the type of the signal in the second signal based on the type indication. Therefore, efficiency of obtaining the type of the signal in the second signal is high.

In a possible implementation, the plurality of code blocks include a first code block and a second code block, the first code block includes the second signal, the second code block includes the third signal, and a type of the first code block indicates a type of a signal included in the second signal. In this implementation, no additional type indication is required to indicate the type of the signal included in the second signal. Overheads for indicating the type of the signal are low.

In a possible implementation, the plurality of code blocks include a first code block and a second code block, the first code block includes a second signal, the second code block includes the third signal, the first signal is related to an Ethernet frame, an Ethernet frame is associated with at least one first code block of the plurality of code blocks, and the second code block is transmitted before or after a first code block associated with the same Ethernet frame. Therefore, the second code block may be transmitted at an interframe gap (interframe gap, IPG) or when no Ethernet frame is present. The second code block instead of an idle code block is transmitted in at least one case of the interframe gap or a case in which no Ethernet frame is present, so that a rate of an interface used to transmit the code block can be kept unchanged when the second code block is transmitted. This keeps power consumption for transmitting the code block unchanged. In addition, in the method, the second code block instead of the idle code block is transmitted at the interframe gap or when no Ethernet frame is present, and the second code block includes the type indication or includes the type indication and the management information. Therefore, information transmission efficiency is high in the method.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, the at least one first code block includes a first code block associated with a preamble of the Ethernet frame, and the second code block is transmitted in place of the first code block associated with the preamble. In this manner, the second code block is transmitted in place of the first code block associated with the preamble, so that a rate of an interface used to transmit the code block can be kept unchanged when the second code block is transmitted in this implementation. This keeps power consumption for transmitting the code block unchanged. In addition, when a code block transmitted at the interframe gap is deleted to compensate for and adjust a clock difference between interfaces, because the second code block in this implementation is transmitted in place of the first code block associated with the preamble, and is not transmitted during the interframe gap, the second code block is not deleted due to compensation and adjustment for the clock difference. Transmission reliability of the second code block is high.

In a possible implementation, that the first chip sends the at least one code block through the serial channel includes: The first chip negotiates with a chip located at the other end of the serial channel, a clock used for transmitting the at least one code block; and the first chip sends the at least one code block through the serial channel according to the clock determined through negotiation. The clock used for transmitting the code block is negotiated with the peer chip, so that a frequency of the clock used when the code block is transmitted in the method can adapt to a situation of the chips at the two ends of the serial channel. Therefore, when the code block is sent according to the clock determined through negotiation, the code block can be received, according to the clock determined through negotiation, by the chip located at the other end of the serial channel. This ensures reliability of code block transmission.

In a possible implementation, when the at least one code block includes a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme. In this case, the frequency of the clock for negotiation can adapt to a situation of a code block to be transmitted. This ensures reliability of transmitting the code block according to the clock determined through negotiation.

In a possible implementation, the first chip is a PHY chip, and the third signal further includes physical-layer channel state indication information. Therefore, the third signal includes rich information types. In addition, when the physical-layer channel state indication information is directly transmitted, the chip that receives the plurality of code blocks obtained through encoding does not need to perform a logical operation on other information than the physical-layer channel state indication information to infer the physical-layer channel state indication information. Therefore, the method is applicable to a point-to-multipoint scenario.

In a possible implementation, the serial channel is a channel between improved serial gigabit media independent interfaces (serial gigabit media independent interfaces, SGMIIs). For example, both the first chip and the second chip that receives the at least one code block include an interface obtained through improvement based on an SGMII, and the serial channel may be a channel between SGMIIs.

According to a second aspect, a decoding method is provided. The method includes: A second chip receives at least one code block through a serial channel, where the at least one code block is obtained by encoding a second signal, the second signal is obtained by combining first signals to be transmitted in n periods, the first signals in the n periods include at least one of data information or control information, the serial channel is used to connect a MAC layer and a PHY layer, and n is a positive integer greater than 1; the second chip decodes the at least one code block to obtain the second signal; and the second chip splits the second signal to obtain n signals.

In the method, the second signal is obtained by combining the first signals in the n periods, and the second signal includes a large quantity of first signals. In other words, in this method, the second signal with a higher data bit width can be converted into the first signal with a lower data bit width. In addition, when the at least one code block obtained by encoding the second signal is received, the at least one code block includes a large quantity of first signals. Signal receiving efficiency is high in this method. When the second signal includes a plurality of types of information, the plurality of types of information can be serially received through the serial channel. A small quantity of channels are required for receiving the plurality of types of information, and costs are low.

In a possible implementation, that the second chip receives the at least one code block through the serial channel includes: The second chip receives a plurality of code blocks through the serial channel, where the plurality of code blocks are obtained by encoding the second signal and a third signal to be transmitted , and the third signal includes management information; and that the second chip decodes the at least one code block to obtain the second signal includes: The second chip decodes the plurality of code blocks to obtain the second signal and the third signal. In the method, when the code block obtained by encoding the third signal is further received, a plurality of types of information can be received in the method. The serial channel used to receive the plurality of code blocks can be implemented by one pin or one group of pins, so that a quantity of pins that are included in the second chip and that are used to implement the serial channel can be small. When the at least one of the data information or the control information is received through the serial channel, and the management information is also received through the serial channel, the data information, the control information, and the management information can be received through the same serial channel. Therefore, costs of receiving the data information, the control information, and the management information are low in this method.

In a possible implementation, the at least one code block includes a first code block and a second code block, the first code block includes the second signal, the second code block includes a type indication, and the type indication indicates a type of a signal included in the second signal; and that the second chip decodes the at least one code block to obtain the second signal includes: The second chip obtains the second signal from the first code block; and that the second chip splits the second signal to obtain the n signals includes: The second chip obtains, based on the type indication included in the second code block, the type of the signal included in the second signal; and the second chip splits the second signal based on the type of the signal included in the second signal to obtain the n signals. In this implementation, the type indication indicating the type of the signal is included in the second code block other than the first code block. The second chip can directly obtain the type indication from the second code block, and obtain the type of the signal in the second signal based on the type indication. Therefore, efficiency of obtaining the type of the signal in the second signal is high.

In a possible implementation, the plurality of code blocks include a first code block and a second code block, the first code block includes the second signal, the second code block includes the third signal, and a type of the first code block indicates a type of a signal included in the second signal, that the second chip splits the second signal to obtain the n signals includes: The second chip obtains, based on the type of the first code block, the type of the signal included in the second signal; and the second chip splits the second signal based on the type of the signal included in the second signal to obtain the n signals. In this implementation, no additional type indication is required to indicate the type of the signal included in the second signal. Overheads for indicating the type of the signal are low.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, and the second code block is transmitted before or after a first code block associated with the same Ethernet frame. Therefore, the second code block can be transmitted at an interframe gap or when no Ethernet frame is present. The second code block instead of an idle code block is transmitted in at least one case of the interframe gap or a case in which no Ethernet frame is present, so that a rate of an interface used to transmit the code block can be kept unchanged when the second code block is transmitted. This keeps power consumption for transmitting the code block unchanged. In addition, in the method, the second code block instead of the idle code block is received at the interframe gap or when no Ethernet frame is present, and the second code block includes the type indication or includes the type indication and the management information. Therefore, information receiving efficiency is high in the method.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, the at least one first code block includes a first code block associated with a preamble of the Ethernet frame, and the second code block is transmitted in place of the first code block associated with the preamble. In this manner, the second code block is transmitted in place of the first code block associated with the preamble, so that a rate of an interface used to transmit the code block can be kept unchanged when the second code block is transmitted in this implementation. This keeps power consumption for transmitting the code block unchanged. In addition, when a code block transmitted at the interframe gap is deleted to compensate for and adjust a clock difference between interfaces, because the second code block in this implementation is transmitted in place of the first code block associated with the preamble, and is not transmitted at the interframe gap, the second code block is not deleted due to compensation and adjustment for the clock difference. Transmission reliability of the second code block is high.

In a possible implementation, that the second chip receives the at least one code block through the serial channel includes: The second chip negotiates with a chip located at the other end of the serial channel, a clock used for transmitting the at least one code block; and the second chip receives the at least one code block through the serial channel according to the clock determined through negotiation. The clock used for transmitting the code block is negotiated with the peer chip, so that a frequency of the clock used when the code block is transmitted in the method can adapt to a situation of the chips at the two ends of the serial channel. Therefore, when the code block is sent according to the clock determined through negotiation, the code block can be received, according to the clock determined through negotiation, by the chip located at the other end of the serial channel. This ensures reliability of code block transmission.

In a possible implementation, when the at least one code block includes a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme. In this case, the frequency of the clock for negotiation can adapt to a situation of a code block to be transmitted. This ensures reliability of transmitting the code block according to the clock determined through negotiation.

In a possible implementation, the second chip is a MAC chip, and the third signal further includes a physical-layer channel state indication signal. Therefore, the third signal includes rich information types. In addition, when the physical-layer channel state indication information is directly transmitted, the second chip does not need to perform a logical operation on other information than the physical-layer channel state indication information to infer the physical-layer channel state indication information. Therefore, the method is applicable to a point-to-multipoint scenario.

In a possible implementation, the serial channel is a channel between improved SGMIIs. In other words, both the first chip and the second chip include an interface obtained through improvement based on an SGMII, and the serial channel may be a channel between SGMIIs.

According to a third aspect, an encoding apparatus is provided. The apparatus is applied to a first chip, and the apparatus includes: a combining module, configured to combine first signals to be transmitted in n periods to obtain a second signal, where the first signals in the n periods include at least one of data information or control information, and n is a positive integer greater than 1; an encoding module, configured to encode the second signal to obtain at least one code block; and a transmitting module, configured to transmit the at least one code block through a serial channel, where the serial channel is used to connect a MAC layer and a PHY layer.

In a possible implementation, the encoding module is configured to encode the second signal and a third signal to be transmitted to obtain a plurality of code blocks, where the third signal includes management information; and the transmitting module is configured to transmit the plurality of code blocks through the serial channel.

In a possible implementation, the at least one code block includes a first code block and a second code block, the first code block includes the second signal, the second code block includes a type indication, and the type indication indicates a type of a signal included in the second signal.

In a possible implementation, the plurality of code blocks include a first code block and a second code block, the first code block includes the second signal, the second code block includes the third signal, and a type of the first code block indicates a type of a signal included in the second signal.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, and the second code block is transmitted before or after a first code block associated with the same Ethernet frame.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, the at least one first code block includes a first code block associated with a preamble of the Ethernet frame, and the second code block is transmitted in place of the first code block associated with the preamble.

In a possible implementation, the transmitting module is configured to: negotiate, with a chip located at the other end of the serial channel, a clock used for transmitting the at least one code block; and send the at least one code block through the serial channel according to the clock determined through negotiation.

In a possible implementation, when the at least one code block includes a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme.

In a possible implementation, the first chip is a PHY chip, and the third signal further includes physical-layer channel state indication information.

In a possible implementation, the serial channel is a channel between improved SGMIIs.

According to a fourth aspect, a decoding apparatus is provided. The apparatus is applied to a second chip, and the apparatus includes: a receiving module, configured to receive at least one code block through a serial channel, where the at least one code block is obtained by encoding a second signal, the second signal is obtained by combining first signals to be transmitted in n periods, the first signals in the n periods include at least one of data information or control information, the serial channel is used to connect a MAC layer and a PHY layer, and n is a positive integer greater than 1; a decoding module, configured to decode the at least one code block to obtain the second signal; and a splitting module, configured to split the second signal to obtain n signals.

In a possible implementation, the receiving module is configured to receive a plurality of code blocks through the serial channel, where the plurality of code blocks are obtained by encoding the second signal and a third signal to be transmitted , and the third signal includes management information; and the decoding module is configured to decode the plurality of code blocks to obtain the second signal and the third signal.

In a possible implementation, the at least one code block includes a first code block and a second code block, the first code block includes the second signal, the second code block includes a type indication, and the type indication indicates a type of a signal included in the second signal; the decoding module is configured to obtain the second signal from the first code block; and the splitting module is configured to: obtain, based on the type indication included in the second code block, the type of the signal included in the second signal; and split the second signal based on the type of the signal included in the second signal to obtain the n signals.

In a possible implementation, the plurality of code blocks include a first code block and a second code block, the first code block includes the second signal, the second code block includes the third signal, and a type of the first code block indicates a type of a signal included in the second signal; and the splitting module is configured to: obtain, based on the type of the first code block, the type of the signal included in the second signal, and split the second signal based on the type included in the second signal to obtain the n signals.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, and the second code block is transmitted before or after a first code block associated with the same Ethernet frame.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, the at least one first code block includes a first code block associated with a preamble of the Ethernet frame, and the second code block is transmitted in place of the first code block associated with the preamble.

In a possible implementation, the receiving module is configured to: negotiate, with a chip located at the other end of the serial channel, a clock used for transmitting the at least one code block; and receive the at least one code block through the serial channel according to the clock determined through negotiation.

In a possible implementation, when the at least one code block includes a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme.

In a possible implementation, the second chip is a MAC chip, and the third signal further includes a physical-layer channel state indication signal.

In a possible implementation, the serial channel is a channel between improved SGMIIs.

According to a fifth aspect, a communication system is provided. The communication system includes a first chip and a second chip, the first chip is configured to perform the encoding method according to any one of the first aspect, and the second chip is configured to perform the decoding method according to any one of the second aspect.

According to a sixth aspect, a chip is provided. The chip includes a MAC layer circuit, and the MAC layer circuit is configured to perform the encoding method according to any one of the first aspect or the decoding method according to any one of the second aspect.

According to a seventh aspect, another chip is provided. The chip includes a PHY layer circuit, and the PHY layer circuit is configured to perform the encoding method according to any one of the first aspect or the decoding method according to any one of the second aspect.

It should be understood that the encoding apparatus and the decoding apparatus may be chips or communication devices. For beneficial effect achieved by the technical solutions according to the third aspect to the seventh aspect of this application and the corresponding possible implementations, refer to technical effect of the technical solutions according to the first aspect and the second aspect and the corresponding possible implementations of the first aspect and the second aspect. Details are not described herein again.

### BRIEF DESCRIPTION OF DRAWINGS

FIG. 1 is a diagram of an SGMII compatible with a transmission rate of 100 Mbps in a related technology;
FIG. 2 is a diagram of signals transmitted through an MII in a related technology;
FIG. 3 is a diagram of an implementation environment in which an MII scenario is used as an example according to an embodiment of this application;
FIG. 4 is a flowchart of an encoding method according to an embodiment of this application;
FIG. 5 is a diagram of transmission of management information in a related technology;
FIG. 6 is a diagram of a to-be-encoded sequence according to an embodiment of this application;
FIG. 7 is a diagram of a process of encoding a second signal and a third signal to obtain a plurality of code blocks according to an embodiment of this application;
FIG. 8 is a diagram of a to-be-encoded sequence according to an embodiment of this application;
FIG. 9 is a diagram of a code block sequence obtained through encoding according to an embodiment of this application;
FIG. 10 is a diagram of locations of second code blocks according to an embodiment of this application;
FIG. 11 is another diagram of locations of second code blocks according to an embodiment of this application;
FIG. 12 is another diagram of locations of second code blocks according to an embodiment of this application;
FIG. 13 is a diagram of second code blocks including management information according to an embodiment of this application;
FIG. 14 is a flowchart of a decoding method according to an embodiment of this application;
FIG. 15 is a diagram of architectures of improved SGMIIs according to an embodiment of this application;
FIG. 16 is a diagram of a structure of an encoding apparatus according to an embodiment of this application;
FIG. 17 is a diagram of a structure of a decoding apparatus according to an embodiment of this application;
FIG. 18 is a diagram of a structure of a computer system according to an embodiment of this application; and
FIG. 19 is a diagram of a structure of another computer system according to an embodiment of this application.

### DESCRIPTION OF EMBODIMENTS

Terms used in implementations of this application are merely used to explain embodiments of this application, but are not intended to limit this application. The following describes embodiments of this application with reference to accompanying drawings.

In the field of communication technologies, a MAC chip and a PHY chip may perform signal transmission through a media independent interface (media independent interface, MII), to implement network communication. The MII may be used in a transmission scenario with a rate of 10 megabits per second (megabit per second, Mbps) or 100 Mbps. For example, the MII may be used in an industrial internet of things scenario. According to the institute of electrical and electronics engineers (Institute of Electrical and Electronics Engineers, IEEE) 802.3 standard, the MII is defined as a parallel interface. The MII includes 18 pins, and the 18 pins are configured to transmit data information, control information, and management information. For a specific manner of transmitting information via the pin of the MII, refer to related content in the IEEE 802.3 standard. Details are not described herein again. However, to reduce packaging costs and allocate pins used to support functions other than network communication, a quantity of pins that are included in a chip and used to support network communication is usually limited. Therefore, a quantity of pins, of the MII, used to implement network communication needs to be reduced.

In a related technology, an SGMII is used to implement signal transmission between a MAC chip and a PHY chip, where a quantity of pins of the SGMII is less than a quantity of pins of the MII. For a 1000baseband (baseband, BASE)-twisted pair (twisted pair, T) Ethernet, the SGMII supports signal transmission between the MAC chip and the PHY chip in the 1000BASE-T Ethernet through a serializer/deserializer (serializer/deserializer, serdes) serial port. The SGMII is also compatible with a rate of a 10/100BASE-T Ethernet. To be specific, when being compatible with the rate of the 10BASE-T Ethernet, the SGMII is compatible with a rate of 10 Mbps; and when being compatible with the rate of the 100BASE-T Ethernet, the SGMII is compatible with a rate of 100 Mbps.

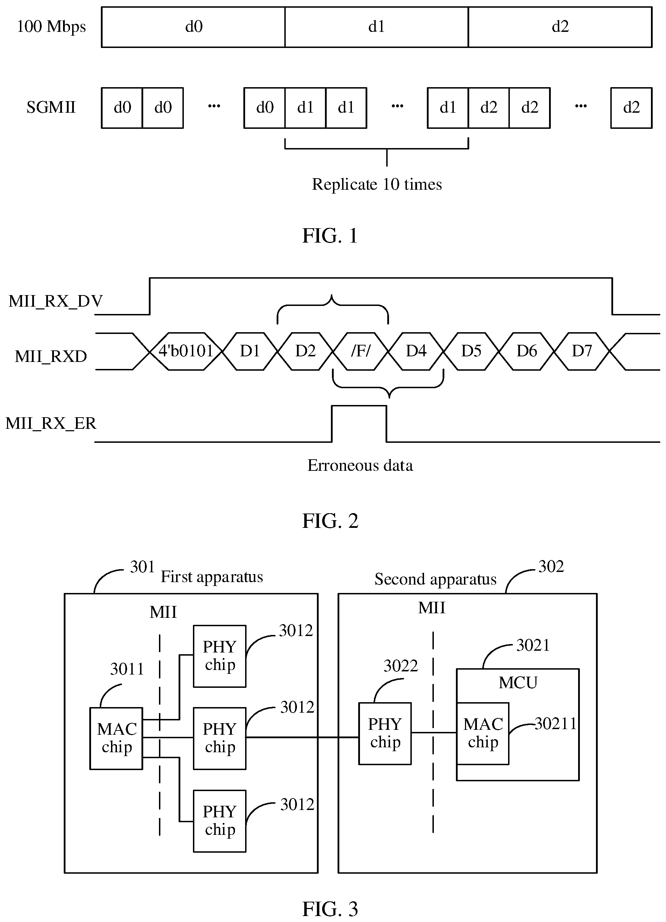

However, the SGMII is actually compatible with the rate of 10 Mbps or 100 Mbps at a gigabit Ethernet (gigabit Ethernet, GE) rate. For example, the GE rate natively supported by the SGMII is 1000 Mbps. The SGMII supports the rate of 10 Mbps and the rate of 100 Mbps by replicating bytes 100 times and 10 times respectively. FIG. 1 is a diagram of an SGMII compatible with a transmission rate of 100 Mbps in a related technology. As shown in FIG. 1, data that needs to be transmitted at the transmission rate of 100 Mbps includes d0, d1, and d2. For each piece of data that needs to be transmitted at the transmission rate of 100 Mbps, each piece of data is replicated for 10 times, and then data obtained through replication is transmitted through the SGMII, to enable the SGMII to be compatible with the rate of 100 Mbps. However, when the SGMII is used to be compatible with a low rate, data obtained through replication causes high transmission costs and high power consumption. In addition, because the data obtained through replication is duplicate data, a solution of the related technology results in transmission of a large amount of duplicate data and low data transmission efficiency.

Further, because a data bit width for the SGMII is different from a data bit width for an MII, if the SGMII is directly used to replace the MII, the different data bit widths cause data bit width mismatch. FIG. 2 is a diagram of signals transmitted through the MII in the related technology. As shown in FIG. 2, a receive data valid (receive data valid, RX_DV) signal indicates 4 bits 0101, D1, D2, /F/, and D4 to D7 are valid data, and a receive error (receive error, RX_ER) prompt signal indicates that /F/ is erroneous data. D1, D2, and D4 to D7 are all error-free data. D1, D2, /F/, and D4 to D7 are all 4 bits. For the erroneous data /F/ transmitted through the MII, if the SGMII is used to replace the MII, because the data bit width for the SGMII is 8 bits, data, transmitted through the SGMII, for replacing the erroneous data /F/ meets a requirement for a data bit width of 8 bits by occupying D2 or D4. In other words, the data bit width of 8 bits for the SGMII cannot match the data bit width of 4 bits for the MII.

Embodiments of this application provide an encoding method and a decoding method, to improve signal transmission efficiency. The encoding method and the decoding method provided in embodiments of this application can be applied to a scenario in which a signal is transmitted through an MII. When the encoding method and the decoding method are applied to this scenario, the signal is a signal transmitted through the MII. In addition, the encoding method and decoding method can also be applied to another scenario other than the MII. For example, an implementation environment in which the encoding method and the decoding method are applied includes a chip 1 and a chip 2. The chip 1 and the chip 2 are connected through a serial channel. The serial channel is used to connect a MAC layer and a PHY layer. The serial channel is a channel between interfaces other than an MII. Both the encoding method and the decoding method may be applied to the chip 1 or the chip 2.

FIG. 3 is a diagram of an implementation environment in which an MII scenario is used as an example according to an embodiment of this application. The encoding method and the decoding method may be applied to the implementation environment shown in FIG. 3. Refer to FIG. 3. The implementation environment includes a first apparatus 301 and a second apparatus 302. The first apparatus 301 includes a MAC chip 3011 and at least one PHY chip 3012 (in FIG. 3, an example in which the first apparatus 301 includes a plurality of PHY chips 3012 is used), and a signal is transmitted between the MAC chip 3011 and each PHY chip 3012 through an MII. The second apparatus 302 includes a MAC chip 30211 and a PHY chip 3022, and a signal is transmitted between the MAC chip 30211 and the PHY chip 3022 through an MII. A signal may be transmitted between the PHY chip 3012 and the PHY chip 3022. In some embodiments, the second apparatus 302 includes an MCU 3021 and the PHY chip 3022, and the MCU 3021 includes the MAC chip 30211. In some embodiments, one or more of the MAC chip 3011, the PHY chip 3012, the MAC chip 30211, and the PHY chip 3022 may be located in a separate chip, or located in a separate die (die), or located in one or more cores of a multi-core chip.

The encoding method and the decoding method provided in embodiments of this application may be applied to signal transmission between the MAC chip 3011 and the PHY chip 3012, or may be applied to signal transmission between the MAC chip 30211 and the PHY chip 3022. A quantity of first apparatuses 301, a quantity of MAC chips 3011, a quantity of PHY chips 3012, a quantity of second apparatuses 302, a quantity of MCUs 3021, a quantity of MAC chips 30211, and a quantity of PHY chips 3022 shown in FIG. 3 are merely examples. This is not limited in embodiments of this application. The first apparatus 301 may be a switch or an apparatus used in an internet of things terminal, and the second apparatus 302 may be an internet of things terminal or an apparatus used in an internet of things terminal. For example, the internet of things terminal includes any one of a pressure meter or a traffic meter in the industrial internet of things. For example, the first apparatus 301 and the second apparatus 302 may be single pair ethernet (single pair ethernet, SPE) devices or advanced physical layer (advanced physical layer, APL) devices.

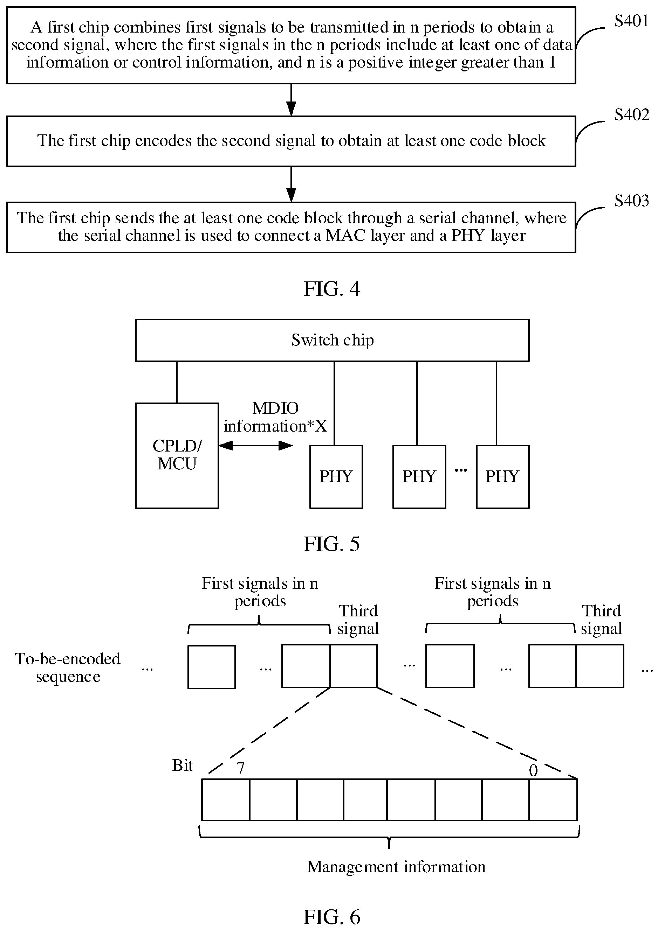

The encoding method provided in embodiments of this application may be shown in FIG. 4. The following describes the method with reference to the implementation environment shown in FIG. 3. The method may be applied to a first chip, and the first chip may be the MAC chip or the PHY chip shown in FIG. 3. As shown in FIG. 4, the method includes but is not limited to S401 to S403.

S401: The first chip combines first signals to be transmitted in n periods to obtain a second signal, where the first signals in the n periods include at least one of data information or control information, and n is a positive integer greater than 1.

For example, the first signals are signals to be transmitted through an MII. In this case, a data bit width of the first signals is 4 bits. For example, the first signals include a transmit error (transmit error, TX_ER) prompt signal, a transmit enable (transmit enable, TX_EN) signal, and a transmit data (transmit data, TXD) signal that are to be transmitted through the MII. A data bit width of the TXD signal is 4 bits, and the TXD signal is represented by TXD<3:0>. The TX_ER signal and the TX_EN signal can identify whether TXD<3:0> is a data signal or a control signal. In other words, the TX_ER signal and the TX_EN signal can identify whether information included in TXD<3:0> is the data information or the control information.

In a possible implementation, combining the first signals in the n periods to obtain the second signal includes: combining the first signals in the n periods in a reference sequence to obtain the second signal. The reference sequence may be determined based on experience or an actual requirement. For example, the reference sequence is a sequence of obtaining the first signals in the n periods, or a sequence other than the sequence of obtaining the first signals in the n periods. Therefore, a sequence of combining the first signals in the n periods is flexible. When the reference sequence is the sequence of obtaining the first signals in the n periods, after the second signal is subsequently sent to a receiving end, the receiving end can directly obtain, according to a sequence of arranging, in the second signal, the first signals in the n periods, the sequence of obtaining the first signals in the n periods, and then obtain, according to the sequence of obtaining the first signals in the n periods, the at least one of the data information or the control information included in the first signals in the n periods. In this case, the sequence of obtaining the first signals in the n periods is obtained, without adjusting the sequence, of the first signals in the n periods, in the second signal, and efficiency of obtaining the sequence of obtaining the first signals in the n periods is high.

For example, regardless of the reference sequence, a data bit width of the second signal is n times the data bit width of the first signal. For example, when the first signals are the signals to be transmitted through the MII and n is equal to 2, the first signals in the two periods are combined to obtain the second signal, and the data bit width of the second signal is 8 bits. Because a data bit width for an SGMII is 8 bits, the second signal may be transmitted through the SGMII. Therefore, the method can be compatible with the SGMII defined in the IEEE 802.3 standard.

S402: The first chip encodes the second signal to obtain at least one code block.

A specific manner of encoding the second signal is not limited in embodiments of this application. For example, the second signal is encoded in an 8-bit (bit, B)/10B scheme to obtain the at least one code block. Therefore, the at least one code block is a code block obtained through 8B/10B encoding. When the at least one code block is obtained in an 8B/10B encoding scheme, the at least one code block may be directly transmitted through a serial channel between SGMIIs. In embodiments of this application, the at least one code block may alternatively be obtained through any one of 8B/9B encoding, 64B/65B encoding, 64B/66B encoding, or 80B/81B encoding. Therefore, a manner of encoding the second signal and a third signal is flexible.

For example, a type of a first code block indicates a type of a signal included in the second signal. Therefore, the type of the signal included in the second signal can be determined based on the type of the first code block, and no additional type indication is required to indicate the type of the signal included in the second signal. Overheads for indicating the type of the signal included in the second signal are low. In a possible implementation, the first signals in the n periods include a plurality of types of information. For example, the first signals in the n periods include the data information and the control information, or the first signals in the n periods include a plurality of types of control information. In this case, the second signal is encoded based on the types of information included in the first signals in the n periods to obtain the at least one code block. In other words, when the first signals in the n periods include the plurality of types of information, the type of the first code block obtained through encoding the second signal may be determined based on a preset correspondence between a type of information and a type of a code block.

For example, n is equal to 2 and an 8B/10B encoding scheme is used. A correspondence between a type of information and a type of a code block may be shown in Table 1. In Table 1, a data bit width of the first signal is 4 bits. Therefore, the two first signals included in the second signal are respectively referred to as a first half byte and a second half byte.

**Table 1**

| First half byte | Second half byte | Type of code block | Description |
|---|---|---|---|
| Data information | Data information | Data code block | The second signal is encoded into a data code block in the 8B/10B encoding. |
| Control information, where a type of the control information is a type 1 | Data information | Control code block | The second signal is encoded into a control code block in the 8B/10B encoding, where a type of the control code block is the type 1. |
| Data information | Control information, where a type of the control information is a type 2 | Control code block | The second signal is encoded into a control code block in the 8B/10B encoding, where a type of the control code block is the type 1. |
| Control information, where a type of the control information is a type 1 | Control information, where a type of the control information is a type 2 | Control code block | Types of the control information have priorities. When the second signal is encoded into one control code block in the 8B/10B encoding, a type of the control code block may be a type with a higher priority. When the second signal is encoded into two control code blocks in the 8B/10B encoding, types of the two control code blocks are respectively the same as the types of the two pieces of control information, and an added bit caused by encoding occupies a subsequent encoded bit width. |

With reference to content in Table 1, it can be learned that when both the two half bytes are the data information, the two half bytes are encoded into one data code block in the 8B/10B encoding. When the first half byte is the data information and the second half byte is the control information, the two half bytes are encoded into one control code block in the 8B/10B encoding, where the type of the control code block is the same as the type of the control information. When the first half byte is the control information and the second half byte is the data information, the two half bytes are encoded into one control code block in the 8B/10B encoding, where the type of the control code block is the same as the type of the control information.

When both the two half bytes are control information, if types of the two pieces of control information are the same, the two half bytes are encoded into one control code block in the 8B/10B encoding, and the type of the control code block is the same as the type of the control information; or if types of the two pieces of control information are different, the two half bytes may be encoded into one control code block in the 8B/10B encoding, or may be encoded into two control code blocks in the 8B/10B encoding. The types of the control information have priorities. When the two half bytes are encoded into one control code block in the 8B/10B encoding, the type of the control code block obtained through encoding may be the same as a type with a higher priority. When the two half bytes are encoded into the two control code blocks in the 8B/10B encoding, the types of the two control code blocks are the same as the types of the two pieces of control information. Because the two half bytes are encoded into the two code blocks in the 8B/10B encoding, a quantity of bits increases, and an added bit caused by encoding occupies an encoding bit width backward. To be specific, a signal to be encoded subsequently is delayed. This avoids missing the signal to be encoded.

For example, the second signal to be encoded is a byte-aligned second signal. Therefore, the second signal can meet an 8B/10B encoding application condition, and the second signal can be encoded in the 8B/10B encoding.

In a possible implementation, the at least one code block includes a first code block and a second code block, the first code block includes the second signal, the second code block includes a type indication, and the type indication indicates a type of a signal included in the second signal. In this implementation, the type of the signal included in the second signal is indicated by using a separate code block. This ensures that various types of signals in the second signal are indicated. In this implementation, because the type of the signal included in the second signal is indicated by using the type indication, a type of the first code block may not indicate the type of the signal included in the second signal. For example, one first code block includes one second signal, one second signal includes the first signals in the n periods, the type indication includes at least one indication bit, the at least one indication bit indicates types of n×m first signals included in m first code blocks, and m is a positive integer. Therefore, when m is greater than or equal to 2, the type indication included in the second code block can indicate types of first signals included in a plurality of first code blocks, and a quantity of first signals whose types are indicated by using the type indication is flexible and diversified.

In embodiments of this application, manners in which the at least one indication bit indicates the types of the n×m first signals include but are not limited to the following Manner 1 and Manner 2.

Manner 1: The at least one indication bit indicates the types of the n×m first signals in a bitmap manner.

For example, there are n×m indication bits, and the n×m indication bits indicate, in the bitmap manner, the types of the n×m first signals included in the m first code blocks. One indication bit corresponds to one first signal, and a value of the indication bit indicates a type of the first signal corresponding to the indication bit. For example, when the value of the indication bit is a first value, the indication bit indicates that the first signal corresponding to the indication bit is a data signal; or when the value of the indication bit is a second value, the indication bit indicates that the second signal corresponding to the indication bit is a control signal. The first value and the second value may be determined based on experience or an actual requirement. For example, the first value is 0, and the second value is 1; or the first value is 1, and the second value is 0.

Manner 2: The at least one indication bit indicates the types of the n×m first signals by using an overall value.

For example, one case of the overall value of the at least one indication bit corresponds to one case of the types of the n×m first signals. Therefore, the types of the n×m first signals can be determined based on the overall value of the at least one indication bit. For example, a chip that subsequently receives a plurality of code blocks can obtain a correspondence between a value and types. After receiving the plurality of code blocks, the chip queries, based on the overall value of the at least one indication bit, the correspondence between a value and types, to obtain the types of the n×m first signals corresponding to the overall value. A manner in which the chip obtains the correspondence between a value and types is not limited in embodiments of this application. For example, the chip stores the correspondence between the value and the types, and directly obtains the stored correspondence between the value and the types. For another example, the chip sends a request instruction to an apparatus that stores the correspondence between the value and the types, where the request instruction is used to request to obtain the correspondence between the value and the types, and the chip receives the correspondence, between the value and the types, sent by the apparatus according to the request instruction. The apparatus that stores the correspondence may be a chip or a device.

With reference to the foregoing Manner 1 and Manner 2, it can be learned that in embodiments of this application, manners in which the at least one indication bit indicates the types of the n×m first signals are flexible and diversified.

For example, when the at least one code block obtained through encoding the second signal includes the first code block and the second code block, and the second code block includes the type indication, an encoding scheme of the first code block corresponds to types of the first signals, in the n periods, included in the first code block. For example, when the first signals in the n periods include at least one piece of data information, the first code block is obtained through encoding based on a data type. When the first signals in the n periods all include control information and control types are the same, the first code block is obtained through encoding based on a control type. When the first signals in the n periods all include control information and control types are different, the first code block is obtained through encoding based on a data type.

In some embodiments, that the first chip encodes the second signal to obtain the at least one code block includes: The first chip encodes the second signal and a third signal to be transmitted to obtain a plurality of code blocks, where the third signal includes management information. The second signal and the third signal are encoded, so that the plurality of code blocks obtained through encoding can include at least one of the data information or the control information, and the plurality of code blocks can further include the management information. Therefore, the plurality of code blocks include rich information types. For example, the management signal includes management data input/output (management data input output, MDIO) information.

In a related technology, management information is transmitted through an independent channel regardless of whether an MII or an SGMII is used. FIG. 5 is a diagram of transmission of the management information in the related technology. A switch chip of a switch shown in FIG. 5 includes a MAC chip, and the MAC chip is not shown in FIG. 5. As shown in FIG. 5, the switch chip is connected to a plurality of PHY chips, and the switch chip is further connected to a complex programmable logic device (complex programmable logic device, CPLD) or a micro control unit (microcontroller unit, MCU). The switch chip separately establishes, via the CPLD or the MCU, channels for transmission of the management information with X PHY chips, where X is a positive integer. That is, the switch chip establishes, via the CPLD or the MCU, the channels for transmission of the management information with the X PHY chips. The management information includes MDIO information. The management information is transmitted through the independent channel. As a result, costs of a device for transmission of the management information in the related technology are high.

In the method provided in embodiments of this application, when the at least one of the data information or the control information is transmitted through a serial channel, the management information may be further transmitted through the serial channel. The data information, the control information, and the management information can be transmitted through the same serial channel, and there is no need to transmit the data information, the control information, and the management information through a plurality of channels respectively. Therefore, costs of transmitting the data information, the control information, and the management information are low in this method.

In a possible implementation, when the first chip is a PHY chip, the third signal further includes physical-layer channel state indication information. When the third signal includes the physical-layer channel state indication information, the chip that subsequently receives the code block obtained by encoding the second signal and the third signal can determine a state of a physical layer channel based on the physical-layer channel state indication information. For example, the physical-layer channel state indication information includes information included in at least one of a carrier sense (carrier sense, CRS) signal or a collision detection (collision detected, COL) signal.

In the related technology, when SGMIIs are directly used to implement signal transmission between a MAC chip and a PHY chip, an SGMII located at a transmitting end does not transmit a COL signal and a CRS signal, and an SGMII located at a receiving end obtains the COL signal and the CRS signal by performing a logical operation on a TX_EN signal and an RX_DV signal. However, in a point-to-multipoint scenario, because a real COL signal and CRS signal, or a virtual COL signal and CRS signal need to be used to indicate a state of a physical link, a channel used to transmit the COL signal and the CRS signal needs to be added to the SGMIIs, resulting in high device costs of the SGMIIs.

According to the method provided in embodiments of this application, the physical-layer channel state indication information can be directly transmitted, and a logical operation does not need to be performed on other information than the physical-layer channel state indication information to infer the physical-layer channel state indication information. Therefore, the method is applicable to the point-to-multipoint scenario. For the MDIO information, information included in the CRS signal, and information included in the COL signal, refer to related content in the IEEE 802.3 standard. Details are not described in embodiments of this application.

A manner of encoding the second signal and the third signal to be transmitted is not limited in embodiments of this application. For example, the second signal and the third signal to be transmitted are encoded in an 8B/10B scheme to obtain a plurality of code blocks. When the plurality of code blocks are all obtained through 8B/10B encoding, the plurality of code blocks obtained through encoding may be directly transmitted through the serial channel between the SGMIIs. In embodiments of this application, the plurality of code blocks may alternatively be obtained through any one of 8B/9B encoding, 64B/65B encoding, 64B/66B encoding, or 80B/81B encoding. Therefore, the manner of encoding the second signal and the third signal is flexible.

In a possible implementation, the plurality of code blocks include a first code block and a second code block, the first code block includes the second signal, and the second code block includes the third signal. In this implementation, the second signal and the third signal are respectively encoded into two code blocks. In this case, a type of the first code block may indicate a type of a signal included in the second signal. A principle of a manner in which the type of the first code block indicates the type of the signal included in the second signal is the same as that of the foregoing manner in which the type of the first code block indicates the type of the signal included in the second signal. Details are not described herein again.

For example, when the type of the first code block indicates the type of the signal included in the second signal, the second code block may include only the third signal, to enable the second code block to include a large quantity of bits of the third signal. When the second code block is transmitted, transmission efficiency of the third signal is high. In some embodiments, when there are a plurality of first code blocks, the second code block may be located between the plurality of first code blocks, before the plurality of first code blocks, or after the plurality of first code blocks. Therefore, a location of the second code block is flexible. When there are a plurality of first code blocks and a plurality of second code blocks, the plurality of first code blocks and the plurality of second code blocks may be periodically arranged. For example, a first quantity of first code blocks and a second quantity of second code blocks are included in one period. The first quantity and the second quantity may be set based on experience or an actual requirement. This is not limited in embodiments of this application.

In some embodiments, when a quantity of bits included in the second code block is greater than or equal to a quantity of bits of the management information, one second code block may include all the bits of the management information. Therefore, all the bits included in the management information can be obtained based on the second code block. When a quantity of bits included in the second code block is less than a quantity of bits of the management information, a plurality of second code blocks include the bits of the management information. In this case, all the bits of the management information can be obtained based on the plurality of second code blocks. In embodiments of this application, a relationship between the quantity of bits included in the second code block and the quantity of bits of the management information is flexible.

For example, when the plurality of first code blocks and the plurality of second code blocks are periodically arranged, the second signal and the third signal periodically appear in an encoding sequence used for encoding. FIG. 6 is a diagram of a to-be-encoded sequence according to an embodiment of this application. As shown in FIG. 6, the to-be-encoded sequence is an encoding sequence used for 8B/10B encoding. In the encoding sequence, a second signal and a third signal periodically appear, the second signal includes first signals in n periods, and the third signal includes 8 bits of management information. Therefore, in a plurality of code blocks obtained based on the to-be-encoded sequence shown in FIG. 6, a first code block and a second code block appear alternately.

In a possible implementation, when the second signals and the third signals are encoded to obtain the plurality of code blocks and the plurality of code blocks include the first code block and the second code block, the second code block further includes a type indication, and the type indication indicates a type of a signal included in the second signal. In other words, the second code block includes the type indication and the third signal. In this implementation, because the type of the signal included in the second signal is indicated by using the type indication, a type of the second signal does not need to be indicated by using a type of the first code block. A principle of a manner in which the type indication indicates the type of the signal included in the second signal is the same as that of the foregoing manner in which the type indication indicates the type of the signal included in the second signal. Details are not described herein again.

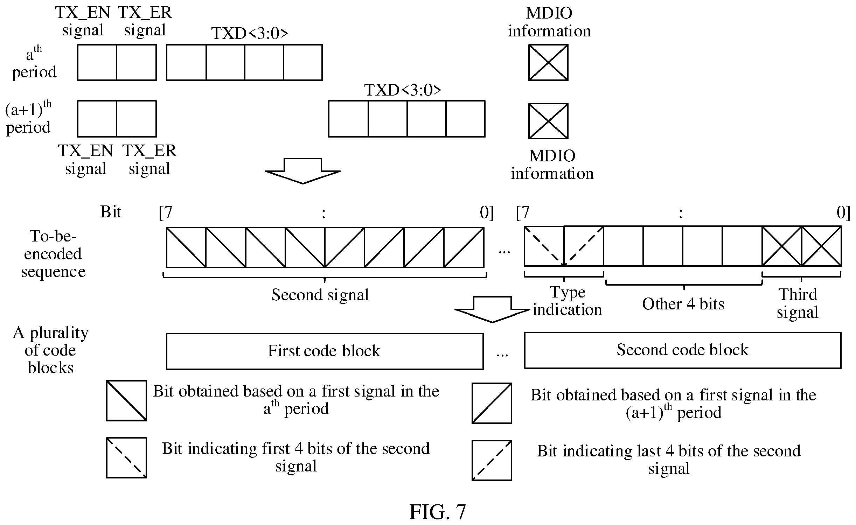

FIG. 7 is a diagram of a process of encoding a second signal and a third signal to obtain a plurality of code blocks according to an embodiment of this application. In FIG. 7, an example in which an encoding scheme is 8B/10B encoding is used. Refer to FIG. 7. A first signal includes a TX_ER signal, a TX_EN signal, and TXD<3:0>. The TX_ER signal and the TX_EN signal can identify whether TXD<3:0> is a data signal or a control signal. To be specific, the TX_ER signal and the TX_EN signal can identify whether information included in TXD<3:0> is data information or control information. The third signal includes MDIO information. In FIG. 7, that n is equal to 2 is used as an example. First signals in two periods include a first signal in an a^{th} period and a first signal in an (a+1)^{th} period, where a is a positive integer. The first signals in the two periods are combined to obtain the second signal, where the second signal includes 8 bits, in other words, the second signal includes one byte, and the byte includes a bit 7 to a bit 0.

The to-be-encoded second signal and third signal are shown in a to-be-encoded sequence in FIG. 7. The to-be-encoded sequence includes the second signal, a type indication indicating a type of a signal included in the second signal, and the third signal. For example, when the second signal includes 8 bits, a sum of a quantity of bits to be encoded into the type indication of a second code block and a quantity of bits to be encoded into the third signal of the second code block is less than or equal to 8 bits. As shown in FIG. 7, the quantity of bits to be encoded into the type indication of the second code block includes 2 bits. A first bit of the 2 bits indicates a type of information of first 4 bits of the second signal, and a last bit of the 2 bits indicates a type of information of last 4 bits of the second signal. The quantity of bits to be encoded into the third signal of the second code block is 2 bits.

When the sum of the quantity of bits to be encoded to obtain the type indication of the second code block and the quantity of bits to be encoded to obtain the third signal of the second code block is less than 8 bits, the second code block further includes bits other than the bits of the type indication and the bits of the third signal. The other bits may be bits that need to include information transmitted in the second code block. This is not limited in embodiments of this application. For example, refer to FIG. 7. The 8 bits to be encoded to obtain the second code block include the 2 bits of the type indication, 2 bits of management information, and the other 4 bits. Locations of the 2 bits of the type indication, the 2 bits of the management information, and the other 4 bits may be shown in FIG. 7. After the second signal and the third signal are obtained, the second signal and the third signal are encoded. Refer to FIG. 7, the second signal and the third signal are encoded to obtain a first code block and the second code block, where the first code block includes the second signal, and the second code block includes the type indication and the third signal.

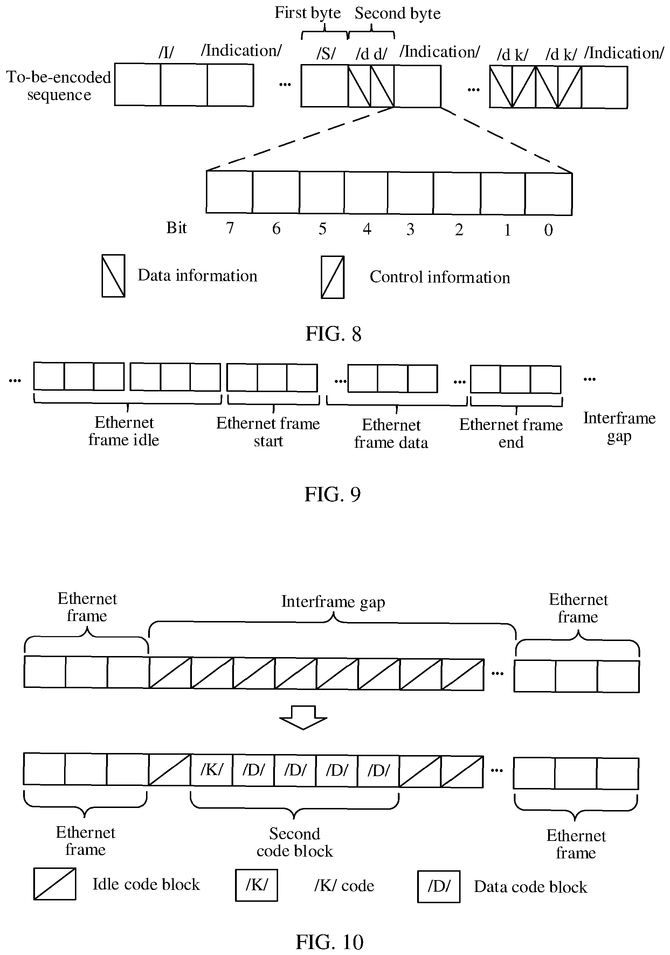

In some embodiments, when the second signal includes 8 bits, the quantity of bits to be encoded to obtain the type indication of the second code block and the quantity of bits to be encoded to obtain the third signal of the second code block are equal to 8 bits. FIG. 8 is a diagram of a to-be-encoded sequence according to an embodiment of this application. A third signal includes MDIO information, information included in a CRS signal, and information included in a COL signal. For ease of description, in FIG. 8, 8 bits to be encoded into a second code block are identified as /indication/. A bit 7 in /Indication/ indicates a type of information in a first half byte of a first byte, a bit 6 in /indication/ indicates a type of information in a second half byte of the first byte, a bit 5 in /indication/ indicates a type of information in a first half byte of a second byte, and a bit 4 in /indication/ indicates a type of information in a second half byte of the second byte. Each of the first byte and the second byte is to be encoded into one first code block, and both the first byte and the second byte are obtained by combining first signals in two periods.

Refer to FIG. 8, a bit 3 in /indication/ is the information included in the CRS signal, a bit 2 in /indication/ is the information included in the COL signal, and both a bit 1 and a bit 0 in /indication/ are the MDIO signals. For example, when the second code block includes a type indication, the second code block is neighboring to a first code block with a type, of a signal included in a second signal, indicated by using the type indication. For example, the type indication included in the second code block indicates the type of the signal included in the second signal in at least one first code block, the second code block is neighboring to the at least one first code block, and the second code block may be located after the at least one first code block. When the second code block is neighboring to the at least one first code block, bits to be encoded to obtain the second code block are neighboring to bits to be encoded to obtain the at least one first code block. For example, as shown in FIG. 8, bits to be encoded to obtain two first code blocks include the first byte and the second byte, and /indication/ to be encoded to obtain the second code block is neighboring to the second byte and located after the second byte.

In the to-be-encoded sequence shown in FIG. 8, 8 bits to be encoded into a first code block may include a plurality of types of information. For example, refer to FIG. 8. When two half bytes included in the 8 bits to be encoded into the first code block are both data information, types of information included in the 8 bits are represented by /d d/. When the 8 bits to be encoded into the first code block include data information and control information, first 4 bits are the data information, and last 4 bits are the control information, types of information included in the 8 bits are represented by /d k/. When the 8 bits to be encoded into the first code block include data information and control information, first 4 bits are the control information, and last 4 bits are the data information, types of information included in the 8 bits are represented by /k d/. When the 8 bits to be encoded into the first code block include control information, and a type of control information of first 4 bits is the same as a type of control information of last 4 bits, types of information included in the 8 bits are represented by /k k/. When the 8 bits to be encoded into the first code block include control information, and a type of control information of first 4 bits is different from a type of control information of last 4 bits, types of information included in the 8 bits are represented by /k1 k2/. Cases of /k d/, /k k/ and /k1 k2/ are not shown in FIG. 8.

For example, a control code block obtained by encoding the second signal can be used to perform at least one operation of delimiting or identifying a serial sequence, where the control code block is a code block obtained by encoding the second signal including the control information, and the serial sequence includes a plurality of code blocks obtained by encoding the second signal. For example, the serial sequence includes a plurality of code blocks obtained by encoding only the second signal, or includes a plurality of code blocks obtained by encoding the second signal and the third signal. An example in which the second signal is encoded in 8B/10B encoding is used. The control code block obtained by encoding the second signal includes one or more control code blocks obtained through 8B/10B encoding, where the one or more control code blocks obtained through 8B/10B encoding are used to perform the at least one operation of delimiting or identifying the serial sequence. For example, the one or more control code blocks obtained through 8B/10B encoding include at least one of an /I/code, an /S/ code, a /T/code, or an /LI/code. The /I/ code indicates idleness of an Ethernet frame, the /S/ code indicates start of an Ethernet frame, the /T/ code indicates end of an Ethernet frame, and the /LI/ code indicates low power consumption. /I/ and /S/ shown in FIG. 8 are an /I/ code and an /S/ code respectively.

One or more control code blocks are obtained through 8B/10B encoding. The code block obtained through encoding according to the method in embodiments of this application can retain a "comma (comma)" field in 8B/10B encoding defined in the IEEE 802.3 standard. Therefore, after the code block obtained through encoding is sent to an apparatus of the receiving end, the apparatus of the receiving end can easily identify a boundary of 8B/10B encoding. For example, K28.5 encoding in the /I/ code includes a "comma" field, and the field is a unique identifier in 8B/10B encoding. For another example, the /S/ code and the /T/ code respectively directly indicate the start of the Ethernet frame and the end of the Ethernet frame. This reduces complexity of determining the start of the Ethernet frame and the end of the Ethernet frame.

FIG. 9 is a diagram of a code block sequence obtained through encoding according to an embodiment of this application. The code block sequence includes a plurality of code blocks. As shown in FIG. 9, the code block sequence includes code blocks that identify Ethernet frame idle, Ethernet frame start, Ethernet frame data, Ethernet frame end, and inter-frame gap. The code block sequence shown in FIG. 9 may be a code block sequence associated with the Ethernet frame. A quantity of code blocks included in the code block sequence shown in FIG. 9 is merely used as an example for description, and is not used to limit a quantity of code blocks included in the code block sequence. For example, the code block that identifies the idleness of the Ethernet frame, the code block that identifies the start of the Ethernet frame, and the code block that identifies the end of the Ethernet frame are respectively the same as a code block that identifies idleness of an Ethernet frame, a code block that identifies start of the Ethernet frame, and a code block that identifies end of the Ethernet frame, obtained through 8B/10B encoding, defined in IEEE 802.3.

In FIG. 9, one square box represents one code block obtained through 8B/10B encoding. For any part of a first half or a second half of the code block, when the any part is obtained based on data information, the any part may be identified by using /d/; or when the any part is obtained based on control information, the any part may be identified by using /k/. Refer to FIG. 9. When the two parts of the code block are both obtained based on data information, the code block may be identified by using /d d/; or when the first and second parts of the code block are respectively obtained based on data information and control information, the code block may be identified by using /d k/.

In a possible implementation, when the plurality of code blocks include a first code block and a second code block, the first code block includes the second signal, the second code block includes the third signal, the first signal is related to an Ethernet frame, an Ethernet frame is associated with at least one first code block of the plurality of code blocks, and the second code block is transmitted before or after a first code block associated with the same Ethernet frame. The second code block includes the third signal, and the third signal includes the management information. The second code block is transmitted before or after the first code block associated with the same Ethernet frame, and the management information can be transmitted at an interframe gap or when no Ethernet frame is present.

Under the IEEE 802.3 standard, code blocks transmitted at an interframe gap and when no Ethernet frame is present are defined as idle code blocks. The second code block instead of the idle code block is transmitted in at least one case of the interframe gap or a case in which no Ethernet frame is present, so that a rate of an interface used to transmit the code block can be kept unchanged when the second code block is transmitted. This keeps power consumption for transmitting the code block unchanged. In addition, in the method, the second code block instead of the idle code block is transmitted at the interframe gap or when no Ethernet frame is present, and the second code block includes the type indication or includes the type indication and the management information. Therefore, information transmission efficiency is high in the method. For a case of the first code block associated with the Ethernet frame, refer to the foregoing content of the code block including the second signal. Details are not described herein again.

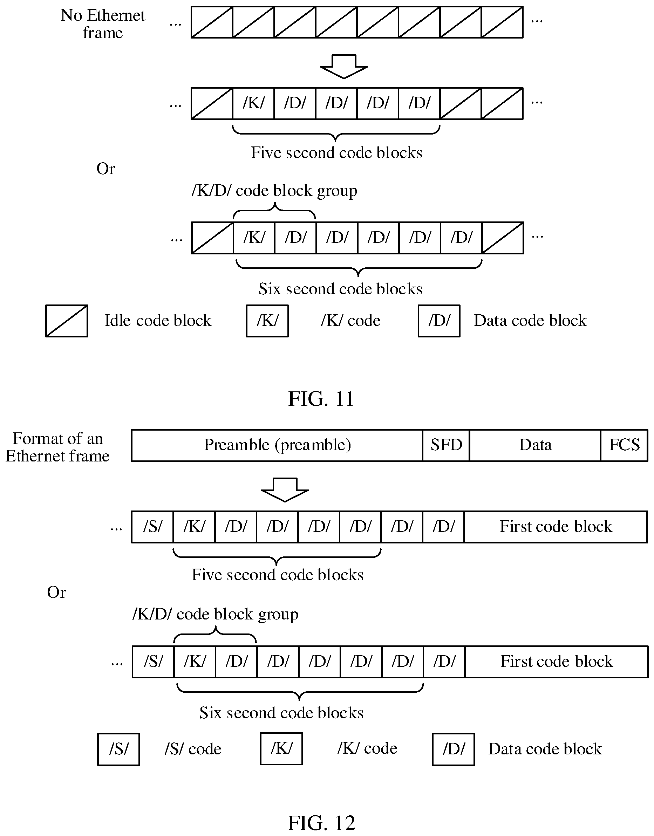

FIG. 10 is a diagram of locations of second code blocks according to an embodiment of this application. As shown in FIG. 10, different from idle code blocks transmitted at an interframe gap, code blocks transmitted at an interframe gap are the second code blocks including management information, and code blocks other than the second code blocks in FIG. 10 are all code blocks associated with an Ethernet frame. FIG. 11 is another diagram of locations of second code blocks according to an embodiment of this application. As shown in FIG. 11, different from idle code blocks transmitted when no Ethernet frame is present, the second code blocks including management information are transmitted when no Ethernet frame is present, and code blocks other than the second code blocks in FIG. 11 are all idle code blocks.

In another possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, the at least one first code block includes a first code block associated with a preamble of the Ethernet frame, and the second code block is transmitted in place of the first code block associated with the preamble Compared with that in the previous implementation, the second code block including the management information is transmitted at a location of the preamble of the Ethernet frame, instead of being transmitted at the interframe gap or when no Ethernet frame is present.

In this manner, the second code block is transmitted in place of the first code block associated with the preamble, so that a rate of an interface used to transmit the code block can be kept unchanged when the second code block is transmitted in this implementation. This keeps power consumption for transmitting the code block unchanged. In addition, because the interframe gap may be used to compensate for and adjust a clock difference between interfaces, when the interframe gap is used to compensate for and adjust the clock difference, a code block transmitted at the interframe gap may be deleted. The second code block is used to replace the first code block associated with the preamble, which can avoid, when the code block transmitted at the interframe gap is deleted, that the second code block including the management information is deleted. Transmission reliability of the second code block is high.

For example, the management information included in the second code block is management information of a first Ethernet frame, the first code block, associated with the preamble, replaced by the second code block is a first code block associated with a preamble of a second Ethernet frame, and transmitting of the first code block associated with the first Ethernet frame is before transmitting of the first code block associated with the second Ethernet frame. For a case of the first code block of the code block associated with the Ethernet frame, refer to the foregoing content of the code block including the second signal. Details are not described herein again.

FIG. 12 is another diagram of locations of second code blocks according to an embodiment of this application. As shown in FIG. 12, the IEEE 802.3 standard specifies that a format of an Ethernet frame includes a preamble (preamble), a start-of-frame delimiter (start frame delimiter, SFD), data (data), and a frame check sequence (frame check sequence, FCS). The preamble includes 7 bytes, and the SFD includes 1 byte. In this embodiment of this application, the 7-byte preamble and the 1-byte SFD are collectively referred to as a preamble. The Ethernet frame uses a start of packet delimiter (start of packet delimiter, SPD) as a start boundary of the Ethernet frame. The SPD is encoded as an /S/ code through 8B/10B encoding. The /S/ code is used to replace a code block obtained through encoding a first byte of the preamble of the Ethernet frame, and the second code blocks are used to replace code blocks obtained through encoding bytes in the preamble other than the first byte. As shown in FIG. 12, the data and the FCS in the Ethernet frame may be encoded into a first code block. For example, a code block transmitted before the Ethernet frame may be an idle code block.

For example, when the second code block is transmitted before or after the first code block associated with the same Ethernet frame, or the second code block is used to replace the first code block associated with the preamble of the Ethernet frame for transmission, the second code block is a control code block or a control code block group whose control type is not specified in an encoding scheme, so that the code block can be determined as the second code block based on the control code block or the control code block group, that is, the second code block is used as a start identifier of a plurality of second code blocks. For example, the second code block is a /K/ code or a /K/D/ code block group whose control type is not specified in 8B/10B encoding, so that the code block can be determined, based on the /K/ code or the /K/D/ code block group, as the second code block including the management information.

In a possible implementation, when there are a plurality of second code blocks, the plurality of second code blocks further include a data code block, and the data code block includes the management information. For example, there are four data code blocks including the management information. Therefore, when the second code block is identified by using the /K/ code, there are five second code blocks including the management information. Alternatively, when the second code block is identified by using the /K/D/ code block group, there are six second code blocks including the management information. When the plurality of second code blocks further include the data code block, the second code block used as the start identifier is located before the data code block included in the plurality of second code blocks.

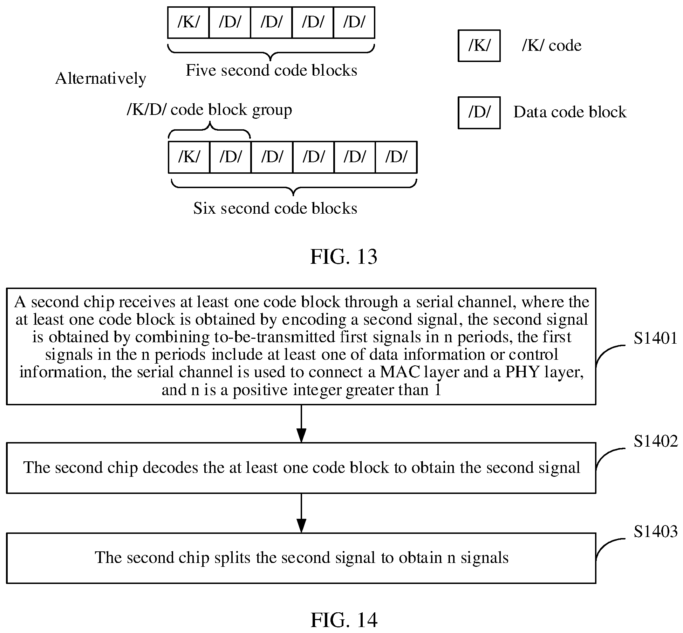

FIG. 13 is a diagram of second code blocks including management information according to an embodiment of this application. As shown in FIG. 13, when there are five second code blocks, the five second code blocks include a /K/ code and four data code blocks. Alternatively, when there are six second code blocks, the six second code blocks include a /K/D/ code block group and four data code blocks. A principle for the case of the five second code blocks or the six second code blocks shown in FIG. 10 to FIG. 12 is the same as that for the case the second code blocks shown in FIG. 13. Details are not described again.

For example, in a case in which no Ethernet frame is present transmitted, after the idle code block and the second code block are sent to an apparatus of a receiving side, the apparatus can implement code block alignment by using an encoding sequence based on the idle code block, and obtain, based on the second code block used as the start identifier, the second code block including the management information. In a case in which there is the Ethernet frame transmitted, after the first code block and the second code block are sent to the apparatus of the receiving side, the apparatus can implement code block alignment by using an encoding sequence based on the first code block, and obtain, based on the second code block used as the start identifier, the second code block including the management information.

S403: The first chip sends the at least one code block through a serial channel, where the serial channel is used to connect a MAC layer and a PHY layer.

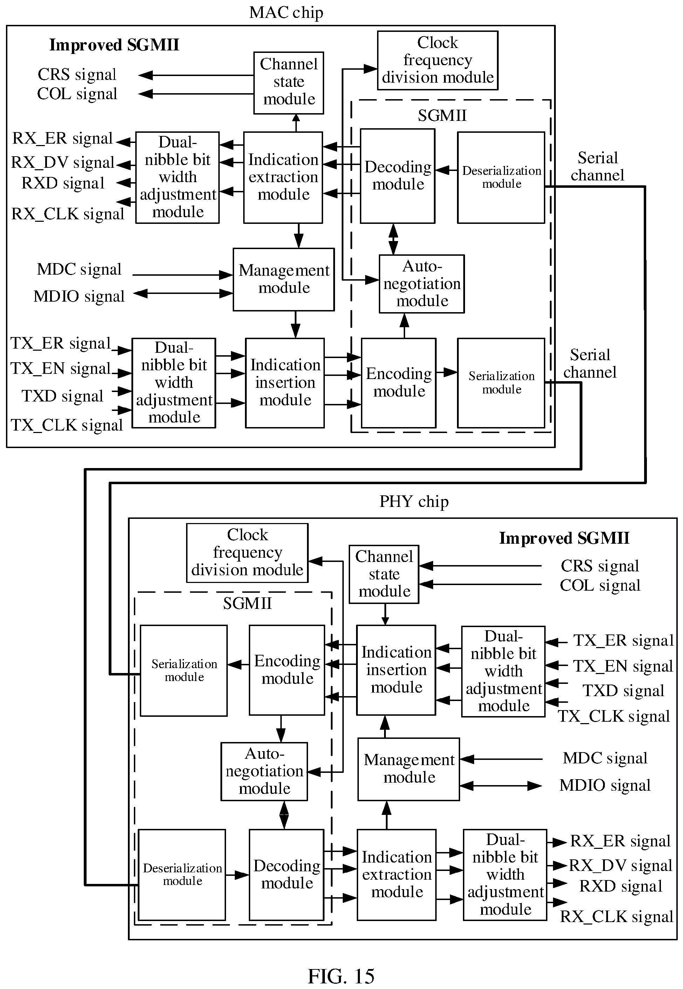

For example, the serial channel is used to connect a coordination sublayer (reconciliation sublayer, RS) and a physical coding sublayer (physical coding sublayer, PCS), or the serial channel is used to connect an RS and a physical layer signal (physical layer signaling, PLS) sublayer. In some embodiments, the serial channel is used to implement data transmission between a MAC sublayer and the PHY layer, or implement data transmission between a STA and the PHY layer. For example, the serial channel is a channel between improved SGMIIs. For example, chips on both sides of the serial channel include the improved SGMIIs, and the two improved SGMIIs are connected through the serial channel. The improved SGMII is an MII that is implemented based on an SGMII and that can be applicable to the encoding method and the decoding method provided in embodiments of this application. For a structure of the improved SGMII, refer to related content in FIG. 15 below. Details are not described herein.

In a possible implementation, when a plurality of code blocks are obtained through encoding, that the first chip sends the at least one code block through the serial channel includes: The first chip sends the plurality of code blocks through the serial channel. The plurality of code blocks include the first code block and the second code block, the first code block includes the second signal, and the second code block includes the third signal, the plurality of code blocks are transmitted through the serial channel, so that the at least one of the data information or the control information and the management information can be transmitted through the same channel.

When the plurality of code blocks are transmitted through the serial channel, the first chip and a second chip that subsequently receives the plurality of code blocks can implement the serial channel by disposing only a few pins, and implement transmission of the at least one of the data information or the control information and the management information. For example, the serial channel is implemented by one pin or a group of pins. Therefore, if the serial channel is implemented by one pin, the pin is used to send the plurality of code blocks. If the serial channel is implemented by a plurality of pins, differential signals whose transmission is to be performed by using the plurality of pins may be first obtained based on the plurality of code blocks, and then transmission of the differential signals is performed by using the plurality of pins, so that the plurality of code blocks are sent through the serial channel.

In comparison with a manner of separately establishing a channel for transmitting the management information and a channel for transmitting both the data information and the control information, in the method provided in embodiments of this application, one channel is established to implement transmission of the data information, the control information, and the management information, and device costs required for establishing the channel are low. In addition, there is no need to transmit the data information, the control information, and the management information through a plurality of channels respectively. Therefore, costs of transmitting the data information, the control information, and the management information are low in this method.

In a possible implementation, that the first chip sends the at least one code block through the serial channel includes: The first chip negotiates, with a chip located at the other end of the serial channel, a clock used for transmitting the at least one code block; and the first chip sends the at least one code block through the serial channel according to the clock determined through negotiation. By negotiating the clock used for transmitting the code block, in the method, a frequency of the clock for transmission can be adjusted. Because the SGMII performs byte alignment by copying data, a frequency of a clock used by the SGMII to transmit a code block is fixed. Therefore, the frequency of the clock used in the method provided in embodiments of this application is more flexible than the frequency of the clock used by the SGMII. In addition, the clock used for transmitting the code block is negotiated with the peer chip, so that the frequency of the clock used when the code block is transmitted in the method can adapt to a situation of the chips at the two ends of the serial channel. Therefore, when the code block is sent according to the clock determined through negotiation, the code block can be received, according to the clock determined through negotiation, by the information located at the other end of the serial channel. This ensures reliability of code block transmission.

For example, a clock negotiation process provided in embodiments of this application is compatible with an auto-negotiation function of the SGMII defined in the IEEE 802.3 standard. For example, that the first chip negotiates, with the chip located at the other end of the serial channel, the clock used for transmitting the at least one code block includes: The first chip determines a frequency of the clock for negotiation, and negotiates, based on the determined frequency, with the chip located at the other end of the serial channel; and when the negotiation succeeds, determines the frequency as the frequency of the clock used for transmitting the code block, or when the negotiation fails, the first chip adjusts the frequency of the clock for negotiation, and negotiates, based on an adjusted frequency, with the chip located at the other end of the serial channel until the negotiation succeeds.

In a possible implementation, the first chip negotiates, based on an auto-negotiation format of the SGMII defined in the IEEE 802.3 standard, with the chip located at the other end of the serial channel. A first frequency, of the clock for negotiation, determined by the first chip may be a primary frequency with a highest rate in a plurality of primary frequencies supported by the first chip. Therefore, when the negotiation succeeds, a rate of transmitting a code block is high. Certainly, the first frequency of the clock for negotiation may alternatively be another primary frequency in the plurality of primary frequencies other than the primary frequency with the highest rate. For example, the plurality of primary frequencies include at least two of a primary frequency with a rate of 10 Mbps, a primary frequency with a rate of 100 Mbps, or a primary frequency with a rate of 1000 Mbps.

In some embodiments, after the negotiation succeeds, the first chip further determines a type of an interface of the chip located at the other end of the serial channel, and transmits the code block in a manner of transmitting the code block through the determined type of the interface. For example, when negotiation based on a primary frequency with a rate of 1000 Mbps succeeds, the first chip determines that the interface of the chip located at the other end of the serial channel is an SGMII, and then transmits the code block in a manner of transmitting the code block through the SGMII.

For example, the first chip periodically negotiates, with the chip located at the other end of the channel, the clock used for transmitting the code block. This avoids a negotiation failure caused by inconsistent power-on time of the chips at the two ends of the serial channel. For example, when a chip of the chips at the two ends is not powered on, the negotiation based on the plurality of primary frequencies fails. When the chips at the two ends are both powered on, the negotiation based on one or more primary frequencies of the plurality of primary frequencies can succeed. Therefore, the clock is periodically negotiated, and the method can avoid the negotiation failure caused by inconsistent power-on time and ensure negotiation effect.

For example, when the at least one code block includes a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme. In this case, the frequency of the clock for negotiation can adapt to a situation of a code block to be transmitted. This ensures reliability of transmitting the code block according to the clock determined through negotiation. For example, the frequency *R* of the clock for negotiation is obtained according to the following formula 1: $R = F ∗ E ∗ \left(C+D\right) / C$

Herein, *F* represents the transmission rate corresponding to the data information in the first signal, *E* represents the encoding efficiency of the encoding scheme, *C* represents the quantity of first code blocks, and *D* represents the quantity of second code blocks. When the encoding scheme is 8B/10B encoding, E is equal to 1.25. When the plurality of first code blocks and the plurality of second code blocks are periodically arranged, the foregoing (*C* + *D*)/*C* may be obtained based on a code block status in one period. For example, (*C* + *D*)/*C* may be obtained by dividing a quantity of code blocks in one period by a quantity of first code blocks in the period.

In the method provided in embodiments of this application, the first signals in the n periods are combined to obtain the second signal, and the second signal includes a large quantity of first signals. In other words, in the method, the first signal with a lower data bit width can be converted into the second signal with a higher data bit width. Therefore, when the second signal is encoded to obtain the at least one code block, and the at least one code block is transmitted, the at least one code block includes a large quantity of first signals. Compared with that in a manner of transmitting a code block including a plurality of repeated signals, signal transmission efficiency is higher in this method. When the second signal includes a plurality of types of information, the plurality of types of information can be serially transmitted through the same serial channel. A small quantity of channels are required for transmitting the plurality of types of information, and costs are low.

When the third signal is further encoded in the method, the plurality of code blocks obtained through encoding can include a plurality of types of information. When the serial channel used to transmit the plurality of code blocks is implemented by one pin or the group of pins, a quantity of pins that are included in the first chip and that are used to implement the serial channel can be small. When the at least one of the data information or the control information is transmitted through the serial channel, and the management information is also transmitted through the serial channel, the data information, the control information, and the management information can be transmitted through the same serial channel, and there is no need to transmit the data information, the control information, and the management information through a plurality of channels respectively. Therefore, costs of transmitting the data information, the control information, and the management information are low in this method.

In addition, according to the method, the clock used for transmitting the code block can be negotiated, so that frequencies of the clock used for transmitting the code block are diversified, and the frequency of the clock used when the code block is transmitted can adapt to the situation of the chips at the two ends of the serial channel. Therefore, when the code block is sent according to the clock determined through negotiation, the code block can be received, according to the clock determined through negotiation, by the information located at the other end of the serial channel. This ensures reliability of code block transmission. When the rate of the frequency of the clock determined through negotiation is low, power consumption of transmitting the code block is low in this method.

The foregoing describes the encoding method provided in embodiments of this application. Embodiments of this application further provide a decoding method. The method may be shown in FIG. 14. The method may be applied to a second chip, and the second chip may be the MAC chip or the PHY chip shown in FIG. 3. As shown in FIG. 14, the method includes but is not limited to S1401 to S1403.

S1401: The second chip receives at least one code block through a serial channel, where the at least one code block is obtained by encoding a second signal, the second signal is obtained by combining first signals to be transmitted in n periods, the first signals in the n periods include at least one of data information or control information, the serial channel is used to connect a MAC layer and a PHY layer, and n is a positive integer greater than 1.

For example, the serial channel is a channel between improved SGMIIs. In a possible implementation, that the second chip receives the at least one code block through the serial channel includes: The second chip negotiates with a chip located at the other end of the serial channel, a clock used for transmitting the at least one code block; and the second chip receives the at least one code block through the serial channel according to the clock determined through negotiation. A principle of a clock negotiation manner of the second chip is the same as that of a clock negotiation manner of the first chip in the foregoing encoding method. Details are not described herein again. For example, when the at least one code block includes a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme. For example, the frequency of the clock for negotiation is determined according to the foregoing Formula 1.

In a possible implementation, that the second chip receives the at least one code block through the serial channel includes: The second chip receives a plurality of code blocks through the serial channel, where the plurality of code blocks are obtained by encoding the second signal and a third signal to be transmitted, and the third signal includes management information. For example, when the second chip is a MAC chip, the third signal further includes a physical-layer channel state indication signal. For a code block obtained by encoding the second signal and a code block obtained by encoding the second signal and the third signal, refer to related descriptions in the foregoing encoding method. Details are not described herein again.

S1402: The second chip decodes the at least one code block to obtain the second signal.

For example, when the at least one code block includes a first code block and a second code block, the first code block includes the second signal, the second code block includes a type indication, and the type indication indicates a type of a signal included in the second signal, and that the second chip decodes the at least one code block to obtain the second signal includes: The second chip obtains the second signal from the first code block.

For example, when the second chip receives a plurality of code blocks, and the plurality of code blocks are obtained by encoding the second signal and the third signal, that the second chip decodes the at least one code block to obtain the second signal includes: The second chip decodes the plurality of code blocks to obtain the second signal and the third signal.

S1403: The second chip splits the second signal to obtain n signals.

In a possible implementation, when the at least one code block includes the second code block, and the second code block includes the type indication, that the second chip splits the second signal to obtain the n signals includes: The second chip obtains, based on the type indication included in the second code block, the type of the signal included in the second signal; and the second chip splits the second signal based on the type of the signal included in the second signal to obtain the n signals.

For example, one first code block includes one second signal, one second signal includes the first signals in the n periods, the type indication includes at least one indication bit, the at least one indication bit indicates types of n×m first signals included in m first code blocks, and m is a positive integer. That the second chip obtains, based on the type indication included in the second code block, the type of the signal included in the second signal includes: The second chip obtains, based on the at least one indication bit, the types of the n×m first signals included in the m first code blocks.

In some embodiments, there are n×m indication bits, and the n×m indication bits indicate, in a bitmap manner, the types of the n×m first signals included in the m first code blocks. That the second chip obtains, based on the at least one indication bit, the types of the n×m first signals included in the m first code blocks includes: The second chip obtains, based on values of indication bits in the n×m indication bits, the types of the first signals corresponding to the indication bits.

In some other embodiments, an overall value of the at least one indication bit indicates the types of the n×m first signals included in the m first code blocks. That the second chip obtains, based on the at least one indication bit, the types of the n×m first signals included in the m first code blocks includes: The second chip obtains, based on the overall value of the at least one indication bit, the types of the first signals of the n×m first signals.

For example, when the type of the signal included in the second signal is indicated by using the type indication, the obtained n signals are the n first signals that are combined to obtain the second signal.

In a possible implementation, when the plurality of code blocks include the first code block and the second code block, the first code block includes the second signal, the second code block includes the third signal, and a type of the first code block indicates a type of a signal included in the second signal, that the second chip splits the second signal to obtain the n signals includes: The second chip obtains, based on the type of the first code block, the type of the signal included in the second signal; and the second chip splits the second signal based on the type of the signal in the second signal to obtain the n signals.

For example, when the first code block is a data code block, the type of the first code block indicates that the type of the signal included in the second signal is a data signal. In this case, the obtained n signals are the n first signals that are combined to obtain the second signal.

For example, when the first code block is a control code block, the type of the first code block indicates that the type of the signal included in the second signal is a control signal, and a type of the control signal is the same as a type of the control code block. In this case, the obtained n signals are n control signals. Types of the n control signals are the same as types of control signals in the n first signals that are combined to obtain the second signal.

In the method provided in embodiments of this application, the second signal is obtained by combining the first signals in the n periods, and the second signal includes a large quantity of first signals. In other words, in this method, the second signal with a higher data bit width can be converted into the first signal with a lower data bit width. When the at least one code block obtained by encoding the second signal is received, the at least one code block includes a large quantity of first signals. Compared with that in a manner of receiving a code block including a plurality of repeated signals, signal receiving efficiency is high in this method. When the second signal includes a plurality of types of information, the plurality of types of information can be serially received through the same serial channel. A small quantity of channels are required for receiving the plurality of types of information, and costs are low.

In the method, when the code block obtained by encoding the third signal is further received, a plurality of types of information can be received in the method. When the serial channel used to receive the plurality of code blocks is implemented by one pin or a group of pins, a quantity of pins that are included in the second chip and that are used to implement the serial channel can be small. When the at least one of the data information or the control information is received through the serial channel, and the management information is also received through the serial channel, the data information, the control information, and the management information can be received through the same serial channel, and there is no need to receive the data information, the control information, and the management information through a plurality of channels respectively. Therefore, costs of receiving the data information, the control information, and the management information are low.

In addition, according to the method, the clock used to receive the code block can be negotiated, so that frequencies of the clock used to receive the code block are diversified, and the frequency of the clock used when the code block is received can adapt to the situation of chips at two ends of the serial channel. Information located at the other end of the serial channel can receive the code block according to the clock determined through negotiation, and the second chip can receive the code block according to the clock determined through negotiation. This ensures reliability of code block transmission. When the rate of the frequency of the clock determined through negotiation is low, power consumption of receiving the code block is low in this method.

FIG. 15 is a diagram of architectures of improved SGMIIs according to an embodiment of this application. As shown in FIG. 15, each of a MAC chip and a PHY chip includes an improved SGMII. As shown in FIG. 15, the improved SGMII includes an SGMII, a dual-nibble bit width adjustment module, an indication insertion module, a management module, an indication extraction module, a channel state module, and a clock frequency division module. The dual-nibble bit width adjustment module is separately connected to the indication insertion module and the indication extraction module, the indication insertion module and the indication extraction module are both connected to the management module, the indication insertion module and the indication extraction module are both connected to the SGMII, and the SGMII is further connected to the clock frequency division module. In the MAC chip, the channel state module is connected to the indication extraction module. In the PHY chip, the channel state module is connected to the indication insertion module.

The SGMII includes an encoding module, a decoding module, a serialization module, a deserialization module, and an auto-negotiation module. The encoding module is separately connected to the indication insertion module and the serialization module, the decoding module is separately connected to the indication extraction module and the deserialization module, the auto-negotiation module is separately connected to the encoding module and the decoding module, and the clock frequency division module is connected to the auto-negotiation module. For example, the improved SGMII in the MAC chip is connected to the improved SGMII in the PHY chip through a pair of serial channels. As shown in FIG. 15, the pair of serial channels includes a serial channel between the serialization module in the MAC chip and the deserialization module in the PHY chip, and also includes a serial channel between the serialization module in the PHY chip and the deserialization module in the MAC chip. A connection between the serialization module and the deserialization module may be referred to as a serdes connection. Signal transmission between the MAC module and the PHY module is implemented through the serial channel, and a signal to be transmitted in parallel through the MII defined in the IEEE 802.3 standard can be transmitted in serial through the serial channel.

Refer to FIG. 15, in the MAC chip, a transmit side of the improved SGMII includes a TX_ER signal, a TX_EN signal, a TXD signal, and a transmit data reference clock (transmit clock, TX_CLK) signal, where the TX_ER signal and the TX_EN signal are used to identify that the TXD signal is data information or control information. The dual-nibble bit width adjustment module combines nibble signals in two periods on the transmit side into one byte signal, and carries an indication signal of a type of information included in the corresponding nibble signals. The nibble signals are the first signals in the foregoing method embodiment, and the byte signal is the second signal in the foregoing method embodiment. The indication insertion module receives the byte signal and the indication signal, and the indication insertion module further receives a management signal sent by the management module, where the management signal includes management information. For example, the management information includes a management frame defined in the IEEE 802.3 standard. For example, the management module receives an MDIO signal and a management data clock (management data clock, MDC) signal, obtains the management frame based on the MDIO signal and the MDC signal, and sends the management signal to the indication insertion module at a rate adaptive to the indication insertion module, where the management signal includes the management frame. The indication insertion module obtains a to-be-encoded sequence based on the received byte signal, indication signal, and management signal, and sends the to-be-encoded sequence to the encoding module. The encoding module encodes the to-be-encoded sequence to obtain a plurality of code blocks, and sends the plurality of code blocks to the serialization module. The serialization module sends the plurality of code blocks in a form of a serial code block stream.

In the PHY chip, after the improved SGMII receives a serial code block stream sent through the serial channel, the deserialization module deserializes the serial code block stream to obtain a plurality of code blocks. The decoding module decodes the plurality of code blocks to obtain a to-be-encoded sequence. The indication extraction module obtains a byte signal, an indication signal, and a management signal from the to-be-encoded sequence, sends the indication signal and the byte signal to the dual-nibble bit width adjustment module, and sends the management signal to the management module. The dual-nibble bit width adjustment module splits the byte signal into nibble signals in two periods based on the indication signal, and outputs the nibble signals in the two periods in a sequence of the two nibble signals. The output nibble signals are receive data (receive data, RXD) signals transmitted through the MII defined in the IEEE 802.3 standard. The management module converts the management signal into an MDIO signals and an MDC signal defined in IEEE 802.3. For example, as shown in FIG. 15, the PHY chip further receives a receive data reference clock (receive clock, RX_CLK) signal.

In the PHY chip, a principle of a manner of transmitting a signal through the improved SGMII is the same as that of a manner of transmitting a signal through the improved SGMII in the MAC chip. In the MAC chip, a principle of a manner of receiving a signal through the improved SGMII is the same as that of a manner of receiving a signal through the improved SGMII in the PHY chip. Still refer to FIG. 15, for the improved SGMII in the PHY chip, the channel state indication module sends a CRS signal and a COL signal to the indication insertion module at the rate adaptive to the indication insertion module. Therefore, when the indication insertion module receives the CRS signal and the COL signal, a to-be-encoded sequence is obtained based on a received byte signal, indication signal, management signal, CRS signal, and COL signal. For the improved SGMII in the MAC chip, the indication extraction module obtains a CRS signal and a COL signal from a to-be-encoded sequence, and sends the CRS signal and the COL signal to the channel state module. The channel state module outputs the CRS signal and the COL signal.

Regardless of the improved SGMII in the MAC chip or the improved SGMII in the PHY chip, the clock frequency division module is configured to obtain a frequency of a clock for negotiation, and send the frequency to the auto-negotiation module, where the auto-negotiation module is configured to negotiate the clock used for transmitting a code block.

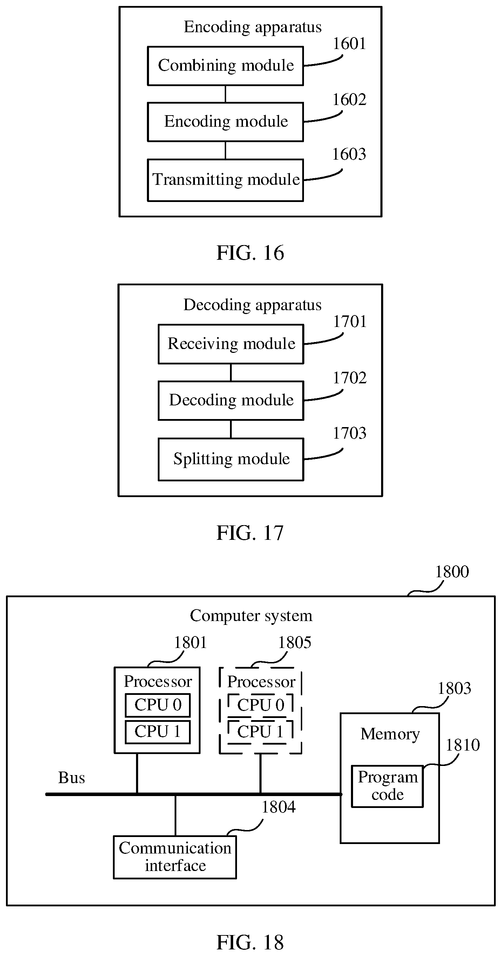

Embodiments of this application further provide an encoding apparatus. FIG. 16 is a diagram of a structure of an encoding apparatus according to an embodiment of this application. The apparatus is applied to a first chip. Based on a plurality of modules shown in FIG. 16, the apparatus can perform all or some operations in the encoding method shown in FIG. 4. It should be understood that the apparatus may include more additional modules than the shown modules or omit some of the shown modules. This is not limited in embodiments of this application. As shown in FIG. 16, the apparatus includes a combining module 1601, an encoding module 1602, and a transmitting module 1603.

The combining module 1601 is configured to combine first signals to be transmitted in n periods to obtain a second signal, where the first signals in the n periods include at least one of data information or control information, and n is a positive integer greater than 1. The encoding module 1602 is configured to encode the second signal to obtain at least one code block. The transmitting module 1603 is configured to transmit the at least one code block through a serial channel, where the serial channel is used to connect a MAC layer and a PHY layer.

In a possible implementation, the encoding module 1602 is configured to encode the second signal and a third signal to be transmitted to obtain a plurality of code blocks, where the third signal includes management information; and the transmitting module 1603 is configured to transmit the plurality of code blocks through the serial channel.

In a possible implementation, the at least one code block includes a first code block and a second code block, the first code block includes the second signal, the second code block includes a type indication, and the type indication indicates a type of a signal included in the second signal.

In a possible implementation, the plurality of code blocks include a first code block and a second code block, the first code block includes the second signal, the second code block includes the third signal, and a type of the first code block indicates a type of a signal included in the second signal.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, and the second code block is transmitted before or after a first code block associated with the same Ethernet frame.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, the at least one first code block includes a first code block associated with a preamble of the Ethernet frame, and the second code block is transmitted in place of the first code block associated with the preamble.

In a possible implementation, the transmitting module 1603 is configured to: negotiate, with a chip located at the other end of the serial channel, a clock used for transmitting the at least one code block; and send the at least one code block through the serial channel according to the clock determined through negotiation.

In a possible implementation, when the at least one code block includes a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme.

In a possible implementation, the first chip is a PHY chip, and the third signal further includes physical-layer channel state indication information.

In a possible implementation, the serial channel is a channel between improved SGMIIs.

In the apparatus provided in embodiments of this application, the first signals in the n periods are combined to obtain the second signal, and the second signal includes a large quantity of first signals. In other words, the apparatus can convert the first signal with a lower data bit width into the second signal with a higher data bit width. Therefore, when the second signal is encoded to obtain the at least one code block, and the at least one code block is transmitted, the at least one code block includes a large quantity of first signals. Compared with that in a manner of transmitting a code block including a plurality of repeated signals, signal transmission efficiency of the apparatus is high. When the second signal includes a plurality of types of information, the plurality of types of information can be serially transmitted through the same serial channel. A small quantity of channels are required for transmitting the plurality of types of information, and costs are low.

When the apparatus further encodes the third signal, the plurality of code blocks obtained through encoding can include a plurality of types of information. When the serial channel used to transmit the plurality of code blocks is implemented by one pin or the group of pins, a quantity of pins that are included in the apparatus and that are used to implement the serial channel can be small. When the at least one of the data information or the control information is transmitted through the serial channel, and the management information is also transmitted through the serial channel, the data information, the control information, and the management information can be transmitted through the same serial channel, and there is no need to transmit the data information, the control information, and the management information through a plurality of channels respectively. Therefore, costs of transmitting the data information, the control information, and the management information are low.

In addition, the apparatus can negotiate the clock used for transmitting the code block, so that frequencies of the clock used for transmitting the code block are diversified, and the frequency of the clock used when the code block is transmitted can adapt to the situation of chips at two ends of the serial channel. Therefore, when the code block is sent according to the clock determined through negotiation, the code block can be received, according to the clock determined through negotiation, by the information located at the other end of the serial channel. This ensures reliability of code block transmission. When the rate of the frequency of the clock determined through negotiation is low, power consumption of transmitting the code block by the apparatus is low.

Embodiments of this application further provide a decoding apparatus. FIG. 17 is a diagram of a structure of a decoding apparatus according to an embodiment of this application. The apparatus is applied to a second chip. Based on a plurality of modules shown in FIG. 17, the apparatus can perform all or some operations in the decoding method shown in FIG. 14. It should be understood that the apparatus may include more additional modules than the shown modules or omit some of the shown modules. This is not limited in embodiments of this application. As shown in FIG. 17, the apparatus includes a receiving module 1701, a decoding module 1702, and a splitting module 1703.

The receiving module 1701 is configured to receive at least one code block through a serial channel, where the at least one code block is obtained by encoding a second signal, the second signal is obtained by combining first signals to be transmitted in n periods, the first signals in the n periods include at least one of data information or control information, the serial channel is used to connect a MAC layer and a PHY layer, and n is a positive integer greater than 1. The decoding module 1702 is configured to decode the at least one code block to obtain the second signal. The splitting module 1703 is configured to split the second signal to obtain n signals.

In a possible implementation, the receiving module 1701 is configured to receive a plurality of code blocks through the serial channel, where the plurality of code blocks are obtained by encoding the second signal and a third signal to be transmitted, and the third signal includes management information; and the decoding module 1702 is configured to decode the plurality of code blocks to obtain the second signal and the third signal.

In a possible implementation, the at least one code block includes a first code block and a second code block, the first code block includes the second signal, the second code block includes a type indication, and the type indication indicates a type of a signal included in the second signal; the decoding module 1702 is configured to obtain the second signal from the first code block; and the splitting module 1703 is configured to: obtain, based on the type indication included in the second code block, the type of the signal included in the second signal; and split the second signal based on the type of the signal included in the second signal to obtain the n signals.

In a possible implementation, the plurality of code blocks include a first code block and a second code block, the first code block includes the second signal, the second code block includes the third signal, and a type of the first code block indicates a type of a signal included in the second signal; and the splitting module 1703 is configured to: obtain, based on the type of the first code block, the type of the signal included in the second signal, and split the second signal based on the type of the signal included in the second signal to obtain the n signals.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, and the second code block is transmitted before or after a first code block associated with the same Ethernet frame.

In a possible implementation, the plurality of code blocks include a first code block and a second code block, the first code block includes the second signal, the second code block includes the third signal, the first signal is related to an Ethernet frame, an Ethernet frame is associated with at least one first code block of the plurality of code blocks, the at least one first code block includes a first code block associated with a preamble of the Ethernet frame, and the second code block is transmitted in place of the first code block associated with the preamble.

In a possible implementation, the receiving module 1701 is configured to: negotiate, with a chip located at the other end of the serial channel, a clock used for transmitting the at least one code block; and receive the at least one code block through the serial channel according to the clock determined through negotiation.

In a possible implementation, when the at least one code block includes a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme.

In a possible implementation, the second chip is a MAC chip, and the third signal further includes a physical-layer channel state indication signal.

In a possible implementation, the serial channel is a channel between improved SGMIIs.

In the apparatus provided in embodiments of this application, the second signal is obtained by combining the first signals in the n periods, and the second signal includes a large quantity of first signals. In other words, the apparatus can convert the second signal with a higher data bit width into the first signal with a lower data bit width. When the at least one code block obtained by encoding the second signal is received, the at least one code block includes a large quantity of first signals. Compared with that in a manner of receiving a code block including a plurality of repeated signals, signal receiving efficiency of the apparatus is high. When the second signal includes a plurality of types of information, the plurality of types of information can be serially received through the same serial channel. A small quantity of channels are required for receiving the plurality of types of information, and costs are low.

When the apparatus further receives the code block obtained by encoding the third signal, a plurality of types of information can be received in the method. When the serial channel used to receive the plurality of code blocks is implemented by one pin or a group of pins, a quantity of pins that are included in the apparatus and that are used to implement the serial channel can be small. When the at least one of the data information or the control information is received through the serial channel, and the management information is also received through the serial channel, the data information, the control information, and the management information can be received through the same serial channel, and there is no need to receive the data information, the control information, and the management information through a plurality of channels respectively. Therefore, costs of receiving the data information, the control information, and the management information are low.

In addition, the apparatus can negotiate the clock used to receive the code block, so that frequencies of the clock used to receive the code block are diversified, and the frequency of the clock used when the code block is received can adapt to the situation of chips at two ends of the serial channel. Information located at the other end of the serial channel can receive the code block according to the clock determined through negotiation, and the apparatus can receive the code block according to the clock determined through negotiation. This ensures reliability of code block transmission. When the rate of the frequency of the clock determined through negotiation is low, power consumption of receiving the code block by the apparatus is low.

It should be understood that the apparatuses provided in FIG. 16 and FIG. 17 implement functions of the apparatuses, division into the foregoing functional modules is used as an example for description. In actual application, the foregoing functions may be allocated to different functional modules for implementation as required. In other words, the internal structure of the device is divided into different functional modules, to implement all or part of the functions described above. In addition, the apparatuses provided in the foregoing embodiments and the method embodiments pertain to a same idea. For a specific implementation process of the apparatuses, refer to the method embodiments. Details are not described herein again. In addition, the apparatus provided in FIG. 16 or FIG. 17 may be a chip or a communication device, and the provided apparatus is, for example, the following computer system.

FIG. 18 is a diagram of a structure of a computer system according to an embodiment of this application. For example, as shown in FIG. 18, the computer system is a computer system 1800. The computer system 1800 may be a network device, a routing device, or a switch device. The computer system 1800 shown in FIG. 18 is configured to perform the encoding method shown in FIG. 4 or the decoding method shown in FIG. 14. The computer system 1800 is, for example, a server, and the computer system 1800 may be implemented by using a general bus architecture.

As shown in FIG. 18, the computer system 1800 includes at least one processor 1801, a memory 1803, and at least one communication interface 1804.

The processor 1801 is a central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the method provided in embodiments of this application. For example, the processor 1801 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor 1801 may implement or execute various logical blocks, modules, and circuits described with reference to content disclosed in embodiments of this application, or may be a combination implementing a computing function, for example, a combination of one or more microprocessors or a combination of a DSP and a microprocessor.

Optionally, the computer system 1800 further includes a bus. The bus is configured to perform transmission of information between the components of the computer system 1800. The bus may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one bold line is used to represent the bus in FIG. 18, but this does not mean that there is only one bus or only one type of bus.

The memory 1803 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other compact disc storage, optical disk storage (including compact disc, laser disc, optical disc, digital versatile disc, Blu-ray disc, and the like), a magnetic disk storage medium or another magnetic storage device, or any other medium that can be used to carry or store expected program code in a form of an instruction or a data structure and that can be accessed by a computer, but is not limited thereto. For example, the memory 1803 exists independently, and is connected to the processor 1801 through the bus. Alternatively, the memory 1803 may be integrated with the processor 1801.

The communication interface 1804 is any apparatus like a transceiver, and is configured to communicate with another device or a communication network. The communication network may be an Ethernet, a radio access network (radio access network, RAN), a wireless local area network (wireless local area network, WLAN), or the like. The communication interface 1804 may include a wired communication interface, and may further include a wireless communication interface. Specifically, the communication interface 1804 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a WLAN interface, a cellular network communication interface, or a combination thereof. The Ethernet interface may be an optical interface, an electrical interface, or a combination thereof. In embodiments of this application, the communication interface 1804 may be used by the computer system 1800 to communicate with another device.

During specific implementation, in an embodiment, the processor 1801 may include one or more CPUs such as a CPU 0 and a CPU 1 shown in FIG. 18. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the computer system 1800 may include a plurality of processors, for example, the processor 1801 and a processor 1805 shown in FIG. 18. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the computer system 1800 may further include an output device and an input device. The output device communicates with the processor 1801, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 1801, and may receive an input from a user in a plurality of manners. For example, the input device may be a mouse, a keyboard, a touchscreen device, a sensing device, or the like.

In some embodiments, the memory 1803 is configured to store program code 1810, and the processor 1801 may execute the program code 1810 stored in the memory 1803. The program code 1810 may include one or more software modules. Optionally, the processor 1801 may also store program code or instructions.

In a specific embodiment, the computer system 1800 in embodiments of this application may include the first chip and/or the second chip in the foregoing method embodiments. The first chip and/or the second chip may be implemented by the processor 1801 in the computer system 1800.

The computer system 1800 may further correspond to the apparatuses shown in FIG. 16 and FIG. 17. Each functional module in the apparatus shown in FIG. 16 or FIG. 17 may be implemented by using a circuit in the processor 1800.

The steps of the encoding method shown in FIG. 4 and the steps of the decoding method shown in FIG. 14 are completed by using an integrated logic circuit of hardware in the processor of the computer system 1800. The steps of the methods disclosed with reference to embodiments of this application may be directly performed and completed by a hardware processor.

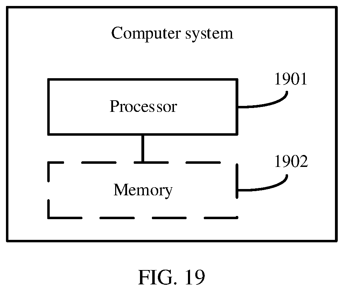

FIG. 19 is a diagram of a structure of another computer system according to an embodiment of this application. The computer system is configured to perform the encoding method shown in FIG. 4 and the decoding method shown in FIG. 14. For example, the computer system is a server. The server may vary greatly due to different configurations or performance. The computer system may include one or more processors 1901. The one or more processors 1901 are configured to implement the first chip and/or the second chip in the method embodiments. As shown in FIG. 19, the computer system may further include one or more memories 1902. The one or more memories 1902 store at least one computer program, and the at least one computer program is loaded and executed by the one or more processors 1901. For example, the processor 1901 is a CPU. Certainly, the computer system may further have components such as a wired or wireless network interface, a keyboard, and an input/output interface, to perform input/output. The computer system may further include another component configured to implement a device function. Details are not described herein.

Embodiments of this application further provide a communication apparatus. The apparatus includes: a transceiver module, configured to perform a receiving and/or transmitting related operation in the encoding method shown in FIG. 4; and a processing module, configured to perform an operation other than the receiving and/or transmitting related operation in the encoding method shown in FIG. 4. Embodiments of this application further provide another communication apparatus. The apparatus includes: a transceiver module, configured to perform a receiving and/or transmitting related operation in the decoding method shown in FIG. 14; and a processing module, configured to perform an operation other than the receiving and/or transmitting related operation in the decoding method shown in FIG. 14. Optionally, the communication apparatus may be a chip.

Embodiments of this application provide a chip. The chip includes a MAC layer circuit, where the MAC layer circuit is configured to perform the encoding method shown in FIG. 4 and/or the decoding method shown in FIG. 14. Embodiments of this application further provide another chip. The chip includes: a PHY circuit, where the PHY circuit is configured to perform the encoding method shown in FIG. 4 and/or the decoding method shown in FIG. 14.

Embodiments of this application further provide a communication system. The communication system includes a first chip and a second chip. The first chip is configured to perform the encoding method shown in FIG. 4, and the second chip is configured to perform the decoding method shown in FIG. 14.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computer machines (advanced RISC machines, ARM) architecture.

Further, in an optional embodiment, if one or more of the computer system, the communication apparatus, the chip, or the communication system further includes a memory, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. By way of example instead of a limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When the software is used for the implementation, all or some of embodiments may be implemented in a form of a computer program or a computer program product. The computer program or the computer program product includes one or more computer instructions. When the computer program instructions are loaded and executed on a computer, all or some of the procedure or functions according to this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid state disk (solid state disk, SSD)), or the like.

To clearly describe interchangeability of hardware and software, the steps and composition of embodiments have been generally described in the foregoing descriptions in terms of functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer, a dedicated computer, or another programmable apparatus for storing annotation content, so that when the program code is executed by the computer or the another programmable apparatus for storing annotation content, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like. Examples of the signal may include propagating signals in electrical, optical, radio, sound, or other forms, such as carrier waves and infrared signals.

It may be clearly understood by a person skilled in the art that, for the purpose of convenient and brief description, for a detailed working process of the foregoing system, device, and module, refer to a corresponding process in the foregoing method embodiment. Details are not described herein.

In the several embodiments provided in this application, it should be understood that the disclosed system, device, and method may be implemented in other manners. For example, the described device embodiment is merely an example. For example, division into the modules is merely division of logical functions and there may be other division manners during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented by some interfaces, devices, or modules, or may be electrical, mechanical, or other forms of connection.

The modules described as separate parts may or may not be physically separate, and parts displayed as modules may or may not be physical modules, to be specific, may be located at one location, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

In this application, terms such as "first" and "second" are used to distinguish between same items or similar items that have basically same functions. It should be understood that there is no logical or time sequence dependency between "first", "second", and "n^{th}", and a quantity and an execution sequence are not limited. It should also be understood that although the following descriptions use terms such as first and second to describe various elements, these elements should not be limited by the terms. These terms are simply used to distinguish one element from another. For example, without departing from the scope of the various examples, the first chip may be referred to as a second chip, and similarly, the second chip may be referred to as a first chip.

It should be further understood that in embodiments of this application, sequence numbers of the processes do not mean execution sequences. The execution sequences of the processes should be determined based on functions and internal logic of the processes, and should not be construed as any limitation on implementation processes of embodiments of this application.

In this application, the term "at least one" means one or more, and the term "a plurality of" in this application means two or more. For example, a plurality of code blocks means two or more code blocks. The terms "system" and "network" are often used interchangeably herein.

It should be understood that the terms used in the descriptions of the various examples in this specification are merely intended to describe specific examples but are not intended to constitute a limitation. The terms "one" ("a" and "an") and "the" of singular forms used in the descriptions of various examples and the appended claims are also intended to include plural forms, unless otherwise specified in the context clearly.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should also be understood that, depending on the context, the phrase "if it is determined..." or "if [a stated condition or event] is detected" may be interpreted to mean "once determining" or "in response to determining..." or "once detecting [the stated condition or event] "or "in response to the detection of [the stated condition or event]".

It should be understood that determining B based on A does not mean that B is determined based only on A, but B may alternatively be determined based on A and/or other information.

It should be further understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. An encoding method, wherein the method comprises:
combining, by a first chip, first signals to be transmitted in n periods to obtain a second signal, wherein the first signals in the n periods comprise at least one of data information or control information, and n is a positive integer greater than 1;
encoding, by the first chip, the second signal to obtain at least one code block; and
transmitting, by the first chip, the at least one code block through a serial channel, wherein the serial channel is used to connect a media access control MAC layer and a physical layer PHY.

2. The method according to claim 1, wherein encoding, by the first chip, the second signal to obtain the at least one code block comprises:
encoding, by the first chip, the second signal and a third signal to be transmitted to obtain a plurality of code blocks, wherein the third signal comprises management information; and
transmitting, by the first chip, the at least one code block through the serial channel comprises:
transmitting, by the first chip, the plurality of code blocks through the serial channel.

3. The method according to claim 1, wherein the at least one code block comprises a first code block and a second code block, the first code block comprises the second signal, the second code block comprises a type indication, and the type indication indicates a type of a signal comprised in the second signal.

4. The method according to claim 2, wherein the plurality of code blocks comprise a first code block and a second code block, the first code block comprises the second signal, the second code block comprises the third signal, and a type of the first code block indicates a type of a signal comprised in the second signal.

5. The method according to claim 2, wherein the plurality of code blocks comprise a first code block and a second code block, the first code block comprises the second signal, the second code block comprises the third signal, the first signal is related to an Ethernet frame, an Ethernet frame is associated with at least one first code block of the plurality of code blocks, and the second code block is transmitted before or after a first code block associated with the same Ethernet frame.

6. The method according to claim 2, wherein the plurality of code blocks comprise a first code block and a second code block, the first code block comprises the second signal, the second code block comprises the third signal, the first signal is related to an Ethernet frame, an Ethernet frame is associated with at least one first code block of the plurality of code blocks, the at least one first code block comprises a first code block associated with a preamble of the Ethernet frame, and the second code block is transmitted in place of the first code block associated with the preamble.

7. The method according to any one of claims 1 to 6, wherein transmitting, by the first chip, the at least one code block through the serial channel comprises:
negotiating, by the first chip, with a chip located at the other end of the serial channel, a clock used for transmitting the at least one code block; and
transmitting, by the first chip, the at least one code block through the serial channel according to the clock determined through negotiation.

8. The method according to claim 7, wherein the at least one code block comprises a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme.

9. The method according to any one of claims 2, 4, 5 and 6, wherein the first chip is a PHY chip, and the third signal further comprises physical-layer channel state indication information.

10. The method according to any one of claims 1 to 9, wherein the serial channel is a channel between improved serial gigabit media independent interfaces SGMIIs.

11. A decoding method, wherein the method comprises:
receiving, by a second chip, at least one code block through a serial channel, wherein the at least one code block is obtained by encoding a second signal, the second signal is obtained by combining first signals to be transmitted in n periods, the first signals in the n periods comprise at least one of data information or control information, the serial channel is used to connect a media access control MAC layer and a physical layer PHY, and n is a positive integer greater than 1;
decoding, by the second chip, the at least one code block to obtain the second signal; and
splitting, by the second chip, the second signal to obtain n signals.

12. The method according to claim 11, wherein receiving, by the second chip, the at least one code block through the serial channel comprises:
receiving, by the second chip, a plurality of code blocks through the serial channel, wherein the plurality of code blocks are obtained by encoding the second signal and a third signal to be transmitted, and the third signal comprises management information; and
decoding, by the second chip, the at least one code block to obtain the second signal comprises:
decoding, by the second chip, the plurality of code blocks to obtain the second signal and the third signal.

13. The method according to claim 11, wherein the at least one code block comprises a first code block and a second code block, the first code block comprises the second signal, the second code block comprises a type indication, and the type indication indicates a type of a signal comprised in the second signal; and decoding, by the second chip, the at least one code block to obtain the second signal comprises:
obtaining, by the second chip, the second signal from the first code block; and
splitting, by the second chip, the second signal to obtain the n signals comprises:
obtaining, by the second chip based on the type indication comprised in the second code block, the type of the signal comprised in the second signal; and
splitting, by the second chip, the second signal based on the type of the signal comprised in the second signal to obtain the n signals.

14. The method according to claim 12, wherein the plurality of code blocks comprise a first code block and a second code block, the first code block comprises the second signal, the second code block comprises the third signal, and a type of the first code block indicates a type of a signal comprised in the second signal; and splitting, by the second chip, the second signal to obtain the n signals comprises:
obtaining, by the second chip based on the type of the first code block, the type of the signal comprised in the second signal; and
splitting, by the second chip, the second signal based on the type of the signal comprised in the second signal to obtain the n signals.

15. The method according to claim 12, wherein the plurality of code blocks comprise a first code block and a second code block, the first code block comprises the second signal, the second code block comprises the third signal, the first signal is related to an Ethernet frame, an Ethernet frame is associated with at least one first code block of the plurality of code blocks, and the second code block is transmitted before or after a first code block associated with the same Ethernet frame.

16. The method according to claim 12, wherein the plurality of code blocks comprise a first code block and a second code block, the first code block comprises the second signal, the second code block comprises the third signal, the first signal is related to an Ethernet frame, an Ethernet frame is associated with at least one first code block of the plurality of code blocks, the at least one first code block comprises a first code block associated with a preamble of the Ethernet frame, and the second code block is transmitted in place of the first code block associated with the preamble.

17. The method according to any one of claims 11 to 16, wherein receiving, by the second chip, the at least one code block through the serial channel comprises:
negotiating, by the second chip, with a chip located at the other end of the serial channel, a clock used for transmitting the at least one code block; and
receiving, by the second chip, the at least one code block through the serial channel according to the clock determined through negotiation.

18. The method according to claim 17, wherein the at least one code block comprises a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme.

19. The method according to any one of claims 12 and 14 to 16, wherein the second chip is a MAC chip, and the third signal further comprises a physical-layer channel state indication signal.

20. The method according to any one of claims 11 to 19, wherein the serial channel is a channel between improved serial gigabit media independent interfaces SGMIIs.

21. An encoding apparatus, wherein the apparatus is used in a first chip, and the apparatus comprises:
a combining module, configured to combine first signals to be transmitted in n periods to obtain a second signal, wherein the first signals in the n periods comprise at least one of data information or control information, and n is a positive integer greater than 1;
an encoding module, configured to encode the second signal to obtain at least one code block; and
a transmitting module, configured to transmit the at least one code block through a serial channel, wherein the serial channel is used to connect a media access control MAC layer and a physical layer PHY.

22. The apparatus according to claim 21, wherein the encoding module is configured to encode the second signal and a third signal to be transmitted to obtain a plurality of code blocks, wherein the third signal comprises management information; and the transmitting module is configured to transmit the plurality of code blocks through the serial channel.

23. The apparatus according to claim 21, wherein the at least one code block comprises a first code block and a second code block, the first code block comprises the second signal, the second code block comprises a type indication, and the type indication indicates a type of a signal comprised in the second signal.

24. The apparatus according to claim 22, wherein the plurality of code blocks comprise a first code block and a second code block, the first code block comprises the second signal, the second code block comprises the third signal, and a type of the first code block indicates a type of a signal comprised in the second signal.

25. The apparatus according to claim 22, wherein the plurality of code blocks comprise a first code block and a second code block, the first code block comprises the second signal, the second code block comprises the third signal, the first signal is related to an Ethernet frame, an Ethernet frame is associated with at least one first code block of the plurality of code blocks, and the second code block is transmitted before or after a first code block associated with the same Ethernet frame.

26. The apparatus according to claim 22, wherein the plurality of code blocks comprise a first code block and a second code block, the first code block comprises the second signal, the second code block comprises the third signal, the first signal is related to an Ethernet frame, an Ethernet frame is associated with at least one first code block of the plurality of code blocks, the at least one first code block comprises a first code block associated with a preamble of the Ethernet frame, and the second code block is transmitted in place of the first code block associated with the preamble.

27. The apparatus according to any one of claims 21 to 26, wherein the transmitting module is configured to: negotiate, with a chip located at the other end of the serial channel, a clock used for transmitting the at least one code block; and send the at least one code block through the serial channel according to the clock determined through negotiation.

28. The apparatus according to claim 27, wherein the at least one code block comprises a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme.

29. The apparatus according to any one of claims 22, 24, 25, and 26, wherein the first chip is a PHY chip, and the third signal further comprises physical-layer channel state indication information.

30. The apparatus according to any one of claims 21 to 29, wherein the serial channel is a channel between improved serial gigabit media independent interfaces SGMIIs.

31. A decoding apparatus, wherein the apparatus is used in a second chip, and the apparatus comprises:
a receiving module, configured to receive at least one code block through a serial channel, wherein the at least one code block is obtained by encoding a second signal, the second signal is obtained by combining first signals to be transmitted in n periods, the first signals in the n periods comprise at least one of data information or control information, the serial channel is used to connect a media access control MAC layer and a physical layer PHY, and n is a positive integer greater than 1;
a decoding module, configured to decode the at least one code block to obtain the second signal; and
a splitting module, configured to split the second signal to obtain n signals.

32. The apparatus according to claim 31, wherein the receiving module is configured to receive a plurality of code blocks through the serial channel, wherein the plurality of code blocks are obtained by encoding the second signal and a third signal to be transmitted, and the third signal comprises management information; and the decoding module is configured to decode the plurality of code blocks to obtain the second signal and the third signal.

33. The apparatus according to claim 31, wherein the at least one code block comprises a first code block and a second code block, the first code block comprises the second signal, the second code block comprises a type indication, and the type indication indicates a type of a signal comprised in the second signal; the decoding module is configured to obtain the second signal from the first code block; and the splitting module is configured to: obtain, based on the type indication comprised in the second code block, the type of the signal comprised in the second signal; and split the second signal based on the type of the signal comprised in the second signal to obtain the n signals.

34. The apparatus according to claim 32, wherein the plurality of code blocks comprise a first code block and a second code block, the first code block comprises the second signal, the second code block comprises the third signal, and a type of the first code block indicates a type of a signal comprised in the second signal; and the splitting module is configured to: obtain, based on the type of the first code block, the type of the signal comprised in the second signal, and split the second signal based on the type of the signal comprised in the second signal to obtain the n signals.

35. The apparatus according to claim 32, wherein the plurality of code blocks comprise a first code block and a second code block, the first code block comprises the second signal, the second code block comprises the third signal, the first signal is related to an Ethernet frame, an Ethernet frame is associated with at least one first code block of the plurality of code blocks, and the second code block is transmitted before or after a first code block associated with the same Ethernet frame.

36. The apparatus according to claim 32, wherein the plurality of code blocks comprise a first code block and a second code block, the first code block comprises the second signal, the second code block comprises the third signal, the first signal is related to an Ethernet frame, an Ethernet frame is associated with at least one first code block of the plurality of code blocks, the at least one first code block comprises a first code block associated with a preamble of the Ethernet frame, and the second code block is transmitted in place of the first code block associated with the preamble.

37. The apparatus according to any one of claims 31 to 36, wherein the receiving module is configured to: negotiate, with a chip located at the other end of the serial channel, a clock used for transmitting the at least one code block; and receive the at least one code block through the serial channel according to the clock determined through negotiation.

38. The apparatus according to claim 37, wherein the at least one code block comprises a plurality of first code blocks and a plurality of second code blocks, and a frequency of the clock for negotiation is determined based on a transmission rate corresponding to the data information in the first signal, a quantity of the first code blocks, a quantity of the second code blocks, and encoding efficiency of an encoding scheme.

39. The apparatus according to any one of claims 32 and 34 to 36, wherein the second chip is a MAC chip, and the third signal further comprises a physical-layer channel state indication signal.

40. The apparatus according to any one of claims 31 to 39, wherein the serial channel is a channel between improved serial gigabit media independent interfaces SGMIIs.

41. A chip, wherein the chip comprises a media access control MAC layer circuit, the MAC layer circuit is configured to perform the encoding method according to any one of claims 1 to 10 or the decoding method according to any one of claims 11 to 20.

42. A chip, wherein the chip comprises a physical layer PHY circuit, wherein the PHY circuit is configured to perform the encoding method according to any one of claims 1 to 10 or the decoding method according to any one of claims 11 to 20.

43. A communication system, wherein the communication system comprises a first chip and a second chip, the first chip is configured to perform the encoding method according to any one of claims 1 to 10, and the second chip is configured to perform the decoding method according to any one of claims 11 to 20.
